# EUROPEAN PATENT SPECIFICATION

(11) **EP 1 662 299 B1**
(45) Date of publication and mention of the grant of the patent: **24.02.2010**
(21) Application number: 03818568.2
(22) Date of filing: 04.09.2003
(51) Int. Cl.: G06K 19/077, G09G 3/36, G02F 1/137, G02F 1/1347

(54) **IC CARD**
IC-KARTE
CARTE A CIRCUIT INTEGRE

(43) Date of publication of application: 31.05.2006
(73) Proprietor: FUJITSU LIMITED, Kawasaki-shi, Kanagawa 211-8588 (JP); Fujitsu Frontech Limited, Inagi-shi, Tokyo 206-8555 (JP)
(72) Inventor: NOSE, Masaki, c/o FUJITSU LIMITED, Kawasaki-shi, Kanagawa 211-8588 (JP); TOMITA, Junji,2c/o FUJITSU LIMITED, Kawasaki-shi, Kanagawa 211-8588 (JP); SHINGAI, Tomohisa, c/o FUJITSU LIMITED, Kawasaki-shi, Kanagawa 211-8588 (JP); YAMAGISHI, Fumio, c/o FUJITSU LIMITED, Kawasaki-shi, Kanagawa 211-8588 (JP); NISHIDE, Kenzo, c/o FUJITSU LIMITED, Kawasaki-shi, Kanagawa 211-8588 (JP); HASHIMOTO, Shigeru, c/o FUJITSU FRONTECH LIMITED, Inagi-shi, Tokyo 206-8555 (JP); SUGIMURA, Yoshiyasu, c/o FUJITSU FRONTECH LIMITED, Inagi-shi, Tokyo 206-8555 (JP); YABE, Yoshikazu, c/o FUJITSU FRONTECH LIMITED, Inagi-shi, Tokyo 206-8555 (JP); KISUNO, Futoshi, c/o FUJITSU FRONTECH LIMITED, Inagi-shi, Tokyo 206-8555 (JP); HIRANO, Takahiro, c/o FUJITSU FRONTECH LIMITED, Inagi-shi, Tokyo 206-8555 (JP)
(74) Representative: Gibbs, Christopher Stephen
(86) International application number: PCT/JP2003/011307
(87) International publication number: WO 2005/024499

(56) References cited:
- EP-A1- 0 823 587
- EP-A1- 1 117 068
- EP-A2- 0 219 064
- EP-A2- 0 735 519
- EP-A2- 0 890 866
- EP-A2- 0 890 866
- EP-A2- 0 957 393
- EP-A2- 1 296 311
- EP-A2- 1 298 631
- WO-A-97/05520
- GB-A- 1 597 388
- JP-A- 5 242 313
- JP-A- 10 261 060
- JP-A- 11 237 600
- JP-A- 11 242 726
- JP-A- 2000 276 871
- JP-A- 2000 278 573
- JP-A- 2000 278 573
- JP-A- 2001 014 435
- JP-A- 2001 184 033
- JP-A- 2001 282 204
- JP-A- 2002 109 579
- JP-A- 2002 109 579
- JP-A- 2002 287 135
- JP-A- 2003 029 294
- JP-A- 2003 145 949
- US-A- 5 285 214
- US-A1- 2001 043 205

## Description

### TECHNICAL FIELD

The present invention relates to an IC card that transmits information to an external device and receives information from the external device, and, more particularly to an IC card that effectively displays information by making the best use of the characteristics of cholesteric liquid crystals, to improve users' convenience.

### BACKGROUND ART

Conventionally, IC cards with an integrated circuit (IC) such as a memory or a microprocessor built therein and having information storage and processing functions have been widely used. Furthermore, IC cards with a display function for displaying stored data have been used recently.

The IC cards with the display function include an IC card of a thermal writing method where print and deletion are performed by using a thermal coupling material, and an IC card of a magnetic writing method where print and deletion are performed by using a magnetic material.

In such display methods, however, there has been a problem that, when the display is rewritten, it is necessary to insert the IC card into an information recording device having a thermal head or a magnetic head, and hence, it is not suitable for the application to a non-contact type IC card.

Therefore, a non-contact information recording and displaying method is disclosed in Patent Document 1, in which the display is rewritten, using radio waves received from an external terminal as a power source, and information is displayed by a liquid crystal display device having a memory property and capable of maintaining the display without consuming the power. As an example of the liquid crystal display device, there is a device using selective reflection of light by the cholesteric liquid crystals.
(Patent Document 1): Japanese Patent Application Laid-open No. 2000-113137

JP 2002-109 579 (Minolta) shows a refinement of the idea, using a matrix-addressed cholesteric display.

However, according to the non-contact information recording and displaying method described above, the cholesteric liquid crystal is mentioned only as an example of the liquid crystal display device having the memory property, and there is not mentioned as to how to use the characteristics of cholesteric liquid crystals effectively in the IC card. That is, a specific method for effectively using the characteristics of the cholesteric liquid crystals is not sufficiently disclosed.

For example, by effectively using the characteristics of the cholesteric liquid crystals, other than the memory property, the convenience of the IC card with the display function can be further improved, for example, the visibility can be improved.

The present invention has been achieved to solve the above problems. It is an object of the present invention to provide an IC card that effectively displays information by making the best use of the characteristics of the cholesteric liquid crystals, to improve users' convenience.

### DISCLOSURE OF INVENTION

According to an aspect of the present invention, an IC card, as disclosed in claim 1 and that performs any one of transmission of information to an external device and reception of information from the external device or both is claimed.

According to the present invention, the visibility can be improved by changing the display color according to the displayed information, and information can be displayed by making the best use of the characteristics of liquid crystals that form a cholesteric phase, thereby improving the users' convenience. Furthermore, by using the liquid crystals that form the cholesteric phase, an IC card including a liquid crystal display capable of performing color display with high lightness can be manufactured at a low cost.

### BRIEF DESCRIPTION OF DRAWINGS

Fig. 1 is a block diagram of a configuration of an IC card system according to a first embodiment;
Fig. 2 is a schematic block diagram of a hardware configuration of the IC card according to the first embodiment;
Figs. 3A and 3B are explanatory diagrams of a display principle of a liquid crystal display using cholesteric liquid crystals;
Fig. 4 is an example of data display performed by using the cholesteric liquid crystals;
Fig. 5 is a conceptual diagram for explaining a setting method of an oriented state of liquid crystal molecules in the cholesteric liquid crystals;
Fig. 6 depicts a structure of the liquid crystal display according to the first embodiment;
Fig. 7 is an example of a spectrum of white light obtained by mixing red light and blue light;
Figs. 8A and 8B are examples of color displays by the liquid crystal display according to the first embodiment;
Fig. 9 is a graph of a visibility curve expressing a human visibility characteristic;
Fig. 10 depicts a relationship between lightness of blue reflected light and a half breadth of spectrum of the blue reflected light;
Fig. 11 depicts a relationship between lightness of white reflected light obtained by mixing red reflected light and blue reflected light and a half breadth of the blue reflected light;
Fig. 12 depicts a relationship between a contrast ratio of the white reflected light obtained by mixing red reflected light and blue reflected light with respect to the blue reflected light and the half breadth of the blue reflected light;
Figs. 13A and 13B are examples of displays by the liquid crystal display according to the first embodiment;
Figs. 14A and 14B depict a configuration of the liquid crystal display according to a second example not falling within the scope of the invention;
Fig. 15 depicts the spectrum of red light, green light, and blue light reflected by cholesteric liquid crystal layers;
Fig 16 depicts a visual transfer function with respect to a spatial frequency of a black and white striped pattern;
Fig. 17 is a block diagram of a configuration of the IC card according to a third embodiment;
Figs. 18A and 18B are conceptual diagrams for explaining a data display method according to the third embodiment;
Fig. 19 depicts a structure of the liquid crystal display according to a third example, not embodying the invention;
Fig. 20 depicts a simplified structure of liquid-crystal display, compared to that shown in Fig. 19;
Figs. 21A, 21B and 21C are examples of switching displays for switching from single data display to two data display by using the liquid crystal display shown in Fig. 20;
Fig. 22 is an overview of the IC card with the liquid crystal display shown in Fig. 20 or 21A to 21C;
Fig. 23 is a block diagram of a configuration of the liquid crystal display according to a fourth embodiment;
Figs. 24A and 24B are examples of displays by a liquid crystal display having a luminous layer;
Fig. 25 depicts a configuration of the liquid crystal display improved by using a quarter-wave plate and a polarizing plate;
Fig. 26 depicts a configuration of the liquid crystal portion having a cholesteric liquid crystal layer that reflects right-circularly polarized light and a cholesteric liquid crystal portion that reflects left-circularly polarized light;
Figs. 27A, 27B and 27C depict a spectrum of light emitted from a luminous layer in a dark place and having penetrated a cholesteric liquid crystal portion;
Fig. 28 depicts a method by which the IC card is supplied with light energy from a reader/writer;
Figs. 29A and 29B are examples of AC pulse voltages in which a polarity is reversed in positive and negative and an absolute value of amplitude is the same;
Figs. 30A and 30B are examples of DC pulse voltages to be applied to the cholesteric liquid crystal layer;
Fig. 31 is an example of an AC pulse voltage having an interval during which a voltage is not applied at a time of reversing the polarity;
Fig. 32 is an example of an AC pulse voltage having different positive/negative voltage amplitudes;
Figs. 33A and 33B are examples of DC pulse voltages having a different polarity according to the display rewriting frequency on the liquid crystal display;
Figs. 34A and 34B are examples of DC pulse voltages to be applied at a time of rewriting the display in two stages;
Figs. 35A and 35B depict a relationship between voltage and temperature required for shifting the state of the cholesteric liquid crystals;
Fig. 36 depicts a relationship between the number of voltage application to the cholesteric liquid crystals and display lightness and contrast;
Fig. 37 depicts timing charts of initialization timing of the cholesteric liquid crystals;
Figs. 38A, 38B and 38C depict a display initialization process of the cholesteric liquid crystal layer;
Figs. 39A and 39B depict a notification process for notifying completion of data communication by changing the display on the liquid crystal display;
Fig. 40 depicts attenuation of the AC pulse voltage to be applied to the cholesteric liquid crystals;
Fig. 41 depicts a structure of the IC card that generates sound for notifying completion of data communication;
Fig. 42 is a flowchart of a notification process procedure performed by the IC card to notify a user whether data communication has finished normally;
Figs. 43A, 43B and 43C are examples of display states when a liquid crystal display formed of the cholesteric liquid crystals is used as a thermometer;
Figs. 44A, 44B and 44C are examples of display states when the liquid crystal display formed of the cholesteric liquid crystals is used as a clinical thermometer;
Fig. 45 depicts a relationship between a temperature range measured by the thermometer and a wavelength of reflected light reflected by the cholesteric liquid crystals in a planar condition according to an eighth embodiment; and
Figs. 46A and 46B are examples of an IC card with a liquid crystal display functioning as a thermometer.

### BEST MODE(S) FOR CARRYING OUT THE INVENTION

Exemplary embodiments of an IC card and an external device according to the present invention are explained below in detail with reference to the accompanying drawings. An example of a non-contact type IC card that communicates with an external device in a non-contact manner is explained below. However, the present invention is not limited thereto, and can be applied to a contact type IC card that communicates with an external device in a contact manner, and a hybrid type IC card that functions as the contact type and the non-contact type.

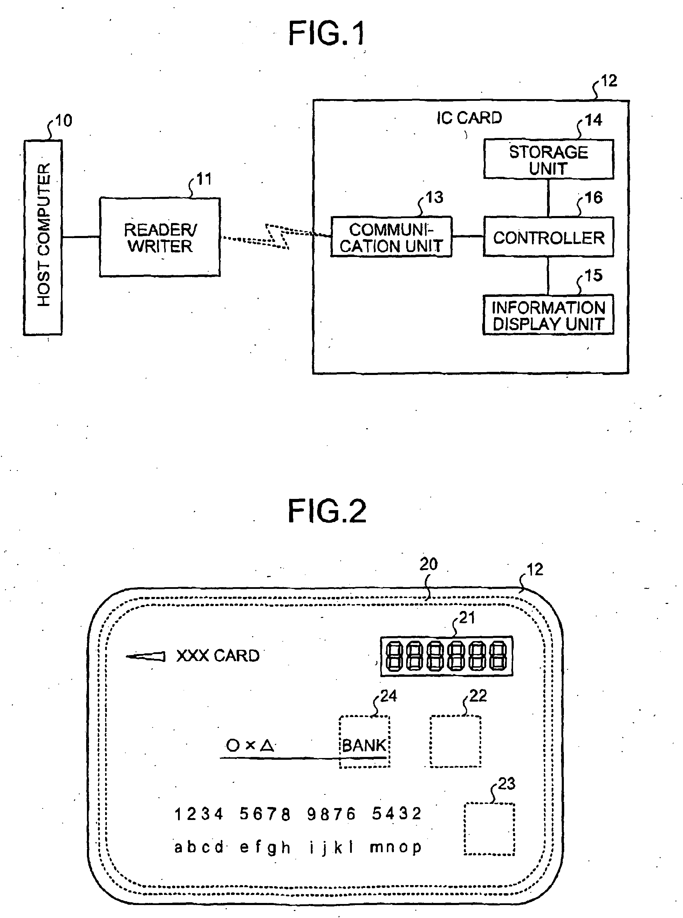

A configuration of an IC card system according to a first embodiment is explained below. Fig. 1 is a block diagram of the configuration of the IC card system according to the first embodiment. The IC card system includes a host computer 10, a reader/writer 11, and an IC card 12.

The host computer 10 generates data to be transmitted to the IC card 12, and performs data processing and management of data received from the IC card 12. The reader/writer 11 is connected to the host computer 10, and establishes communication with the IC card to transfer data.

The IC card 12 is a card type device having a built-in IC chip, and transfers information between the reader/writer 11 and the IC card 12. The IC card 12 can perform data processing such as operation and storage of the received data.

The IC card 12 according to the present invention is different from the IC cards of the thermal writing method and the magnetic writing method, and can display in color the content of data received from the reader/writer 11, the operation result, and stored data, thereby improving the convenience of the IC card 12. The color display is realized by a plurality of cholesteric liquid crystal layers that reflects light of a different wavelength, respectively. Furthermore, since the liquid crystal display is formed by using the cholesteric liquid crystals, display can be maintained without applying a voltage at all times, thereby reducing the consumption of power.

As shown in Fig. 1, the IC card 12 has a communication unit 13, a storage unit 14, an information display unit 15, and a controller 16. The communication unit 13 performs data communication with the reader/writer 11. The storage unit 14 stores data received from the reader/writer 11 and results of data operation.

The information display unit 15 displays in color data received from the reader/writer 11, data stored in the storage unit 14, or various types of information such as an error message, by using a plurality of cholesteric liquid crystal layers. The specific method of color display will be explained later in detail.

The controller 16 transmits various control signals to the respective functional units 13 to 15, to control the entire IC card 12. The controller 16 also performs various types of processes such as storage and operation of data. For example, the controller 16 determines whether the received data satisfies a predetermined condition, and requests the information display unit 15 to change the display color of data based on the determination result.

Fig. 2 is a schematic block diagram of a hardware configuration of the IC card according to the first embodiment. The IC card 12 has an antenna 20, a liquid crystal display 21, a liquid crystal display control IC 22, a communication control IC 23, and a card control IC 24.

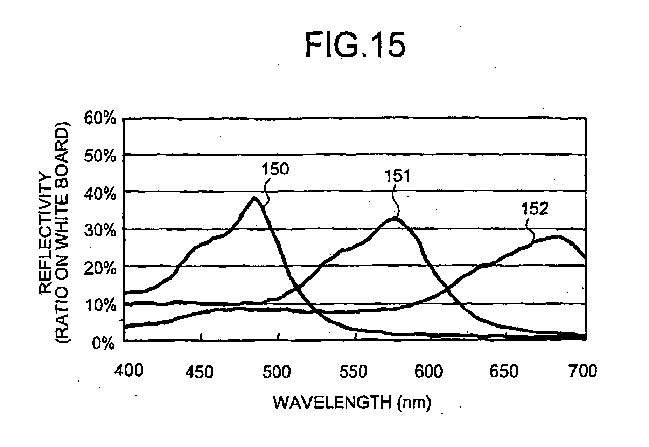

The antenna 20 and the communication control IC 23 correspond to the communication unit 13 shown in Fig. 1. The liquid crystal display 21 and the liquid crystal display control IC 22 correspond to the information display unit 15 shown in Fig. 15, and the card control IC 24 corresponds to the storage unit 14 and the controller 16 shown in Fig. 1.

The antenna 20 is a metal wire that emits radio waves to the air or receives radio waves from the air, at a time of communicating with the reader/writer 11. The liquid crystal display 21 displays data and messages in color. The liquid crystal display control IC 22 controls the liquid crystal display 21, to display data and messages in color.

The communication control IC 23 emits radio waves from the antenna 20, to control a transmission process of data to the reader/writer 11. The communication control IC 23 also performs an extraction process of communication data from the radio waves received by the antenna 20.

The card control IC 24 transmits various types of control signals to the liquid crystal display control IC 22 and the communication control IC 23, to control the entire IC card 12. The card control IC 24 has a memory therein for storing various data. The card control IC 24 can perform various types of data processing such as operation and storage of the data, and can store operation results and the like in the memory.

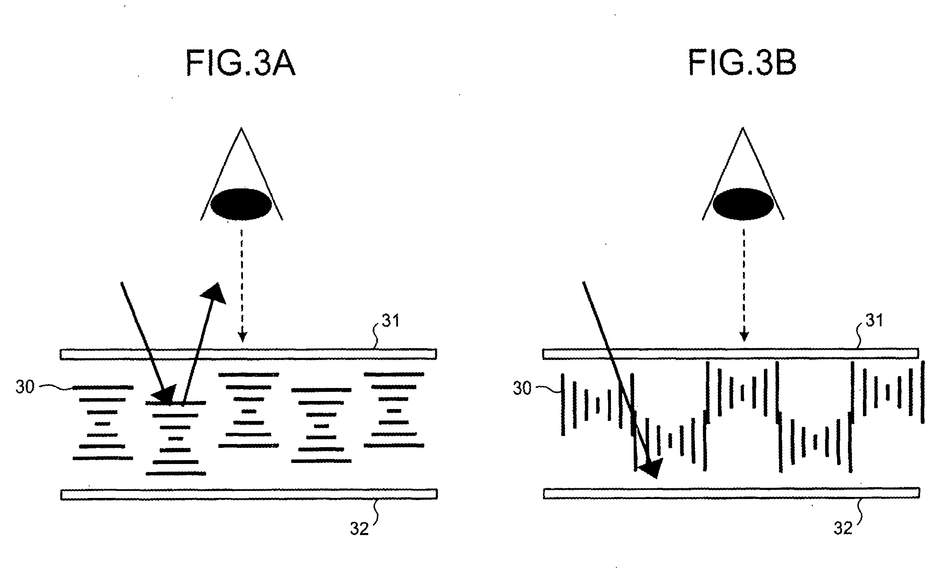

The display principle of the liquid crystal display using the cholesteric liquid crystals is explained below. Figs. 3A and 3B are explanatory diagrams of the display principle of the liquid crystal display using the cholesteric liquid crystals. The cholesteric liquid crystals are liquid crystals where liquid crystal molecules form a helical structure, and there are two stable states, that is, a planar state shown in Fig. 3A and a focal conic state shown in Fig. 3B. These states can be present stably without a voltage being applied, and hence, referred to as bistability.

In the planar state, a direction of screw axis of a liquid crystal molecule 30 having a helical structure is a direction of electric field generated by electrodes 31 and 32, and light in a particular wavelength band is reflected from the cholesteric liquid crystal layer. When it is assumed that a cycle (pitch) in the helical structure of the liquid crystal molecule 30 is p, a relationship between a wavelength λ having the largest reflectivity and an average refractive index n of the liquid crystals is expressed by λ=pxn, and a relationship between a reflecting wavelength band Δλ and anisotropy Δn in the refractive index of the liquid crystals is expressed by Δλ=p×Δn. The reflecting wavelength band Δλ, is widened with an increase of anisotropy Δn in the refractive index of the liquid crystals.

Furthermore, the cholesteric liquid crystals selectively reflect circularly polarized light wound in the same direction as that of distortion of the helical structure. Therefore, since either one of the right-circularly polarized light and the left-circularly polarized light is reflected, and the other is transmitted, the reflectivity becomes 50% theoretically.

In the focal conic state, the direction of screw axis of the liquid crystal molecule 30 having the helical structure is vertical to the direction of electric field generated by the electrodes 31 and 32, and most of the incident light is transmitted.

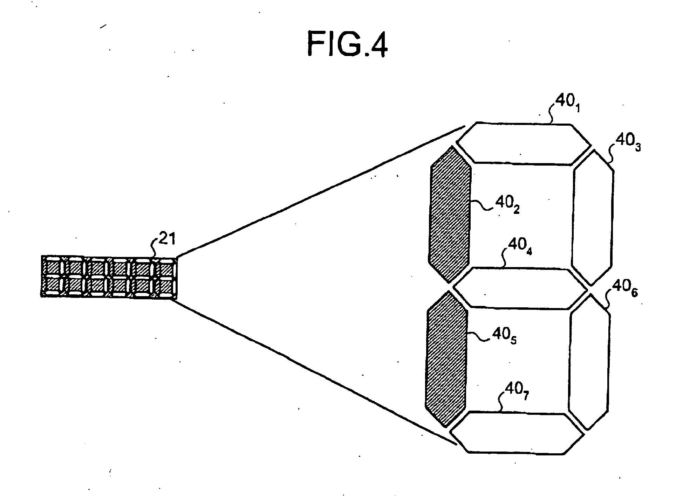

Fig. 4 is one example of data display performed by using the cholesteric liquid crystals. In Fig. 4, an example where figures "333333" are displayed on the liquid crystal display 21 is shown. A display pattern for displaying respective numeric characters is formed of seven segments 40₁ to 40₇. The respective segments 40₁ to 40₇ can set the state of the cholesteric liquid crystals to the planar state or the focal conic state independently, thereby forming various display patterns.

For example, when figure "3" is displayed, segment 40₁, segment 40₃, segment 40₄, segment 40₆, and segment 40₇ are set to the planar state, and segment 40₂ and segment 40₅ are set to the focal conic state, and display is performed by controlling reflection and transmission of light.

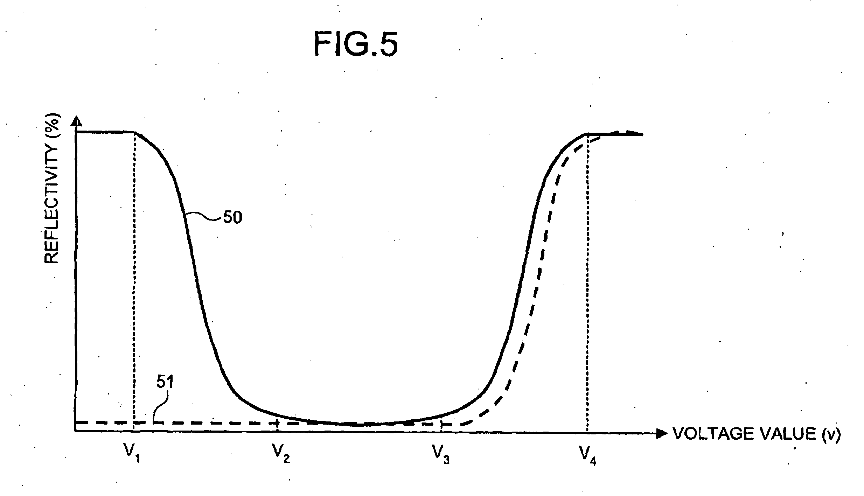

A setting method of the orientation of the liquid crystal molecules in the cholesteric liquid crystals is explained. Fig. 5 is a conceptual diagram for explaining the setting method of the orientation of liquid crystal molecules in the cholesteric liquid crystals. In Fig. 5, a relationship between a reflectivity at which the cholesteric liquid crystals reflect light and a voltage pulse applied to the cholesteric liquid crystals is shown. A solid line 50 indicates the relationship when the state is changed from the planar state to the focal conic state, and a dotted line 51 indicates the relationship when the state is changed from the focal conic state to the planar state.

In the solid line 50, a voltage value V₁ is a threshold voltage of the voltage pulse at which cholesteric liquid crystals start to shift from the planar state to the focal conic state, and a voltage value V₂ and a voltage value V₃ indicate a voltage range where the focal conic state is maintained. A value V₄ is a voltage value of the voltage pulse at which the cholesteric-liquid crystals shift to the complete planar state. Before the cholesteric liquid crystals shift to the planar state, the cholesteric liquid crystals go through a homeotropic state. The homeotropic state stands for a state where the helical structure of the liquid crystal molecules is released, and the major axis of the liquid crystal molecules is directed to the direction of the electric field.

In the dotted line 51, the voltage value V₃ is a threshold voltage of the voltage pulse, at which the cholesteric liquid crystals start to shift from the focal conic state to the planar state, and the voltage value V₄ is a threshold voltage of the voltage pulse, at which the cholesteric liquid crystals become the complete planar state.

Accordingly, when the state is set from the planar state to the focal conic state, a voltage pulse in a range from the voltage value V₂ to the voltage value V₃ is provided. When the state is set from the focal conic state to the planar state, a voltage pulse equal to or larger than the voltage value V₄ is provided.

When a voltage pulse having a medium size, that is, a voltage pulse in a range from the voltage value V₁ to the voltage value V₂, and a voltage pulse in a range from the voltage value V₃ to the voltage value V₄ in the solid line is applied, the orientation of the cholesteric liquid crystals is such that the planar state and the focal conic state are mixed, and the color of the reflected light is a neutral color between a color in the planar state and a color in the focal conic state. The same thing applies to the application of voltage in the range from the voltage value V₃ to the voltage value V₄ in the dotted line 51.

An application of voltage is performed by using an AC pulse voltage in which the polarity is reversed in positive and negative; and an absolute value of amplitude is the same. This is performed for preventing an ionic substance in the cholesteric liquid crystals is polarized, and the display quality is degraded.

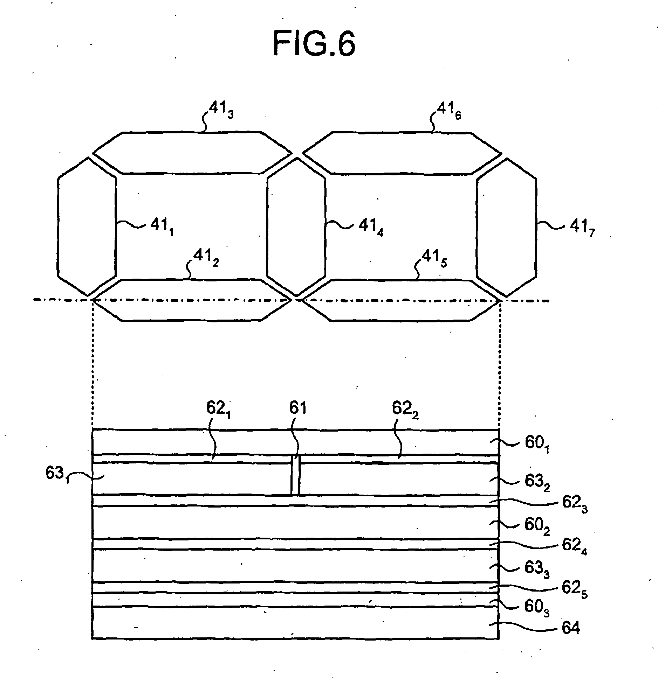

The structure of the liquid crystal display 21 according to the first embodiment is explained below. Fig. 6 depicts the structure of the liquid crystal display 21 according to the first embodiment. In Fig. 6, a plan view of respective segments 41₁ to 41₇ forming the data display pattern, and a cross section cut along a line (one-dot chain line) passing through the segments 41₂ and 41₅ are shown.

As shown in the cross section in Fig. 6, the liquid crystal display 21 has polymeric films 60₁ to 60₃, a separation layer 61, indium-tin oxide (ITO) electrodes 62₁ to 62₅, cholesteric liquid crystal layers 63₁ to 63₃, and a photoabsorption layer 64.

The polymeric films 60₁ to 60₃ are transparent film substrates, on the surface of which any one of the ITO electrodes 62₁ to 62₅ is formed, and made of polyethylene terephthalate (PET) or polyethylene naphthalate (PEN). In the first embodiment, polymeric films 60₁ to 60₃ are used as a transparent substrate, however, thin glass substrates can be used instead of the polymeric films 60₁ to 60₃.

The separation layer 61 separates the ITO electrodes 62₁ and 62₂ and the cholesteric liquid crystal layers 63₁ and 63₂. The ITO electrodes 62₁ to 62₅ are transparent electrodes that apply voltage to the cholesteric liquid crystal layers 63₁ to 63₃. The cholesteric liquid crystal layers 63₁ to 63₃ are liquid crystal layers that reflect light of a predetermined wavelength in the planar state, and transmit light in the focal conic state. The photoabsorption layer 64 absorbs light having penetrated the cholesteric liquid crystal layers 63₁ to 63₃ and exhibits black color. By the function of the photoabsorption layer 64, the display pattern can be displayed in black, when the cholesteric liquid crystal layers 63₁ to 63₃ are in the focal conic state.

The ITO electrodes 62₁ and 62₂ are formed in the shape of respective segments 41₂ and 41₅, and arranged in parallel on the information display surface. The ITO electrode 62₃ functions in a set with the ITO electrodes 62₁ and 62₂, so as to be able to apply voltage independently to the cholesteric liquid crystal layer 63₁ corresponding to the segment 41₂, and the cholesteric liquid crystal layer 63₂ corresponding to the segment 41₅.

The cholesteric liquid crystal layers 63₁, 63₂, and 63₃ are applied with a voltage pulse via the ITO electrodes 62₁ to 62₅, and change the state between the planar state and the focal conic state. Since the upper cholesteric liquid crystal layers 63₁ and 63₂ and the lower cholesteric liquid crystal, layer 63₃ are configured to reflect light having a different wavelength in the planar state, respectively, a color display by a plurality of colors can be realized.

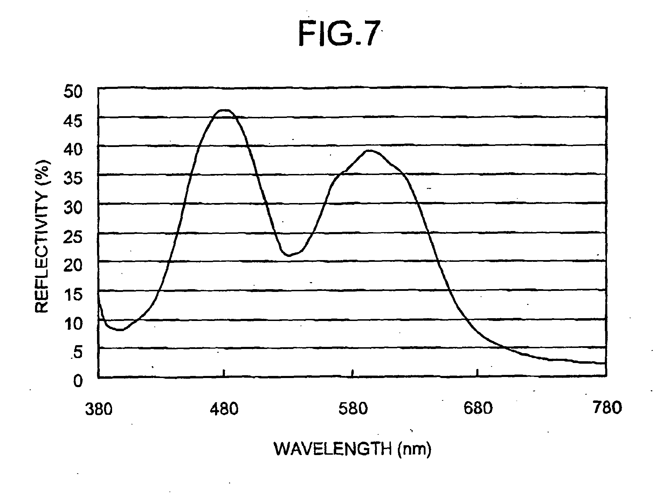

For example, if it is assumed that the reflected light from the cholesteric liquid crystal layers 63₁ and 63₂ is red, and the reflected light from the cholesteric liquid crystal layer 63₃ is blue, when both of the cholesteric liquid crystal layers 63₁ and 63₂ and the cholesteric liquid crystal layer 63₃ are in the planar state, the red light reflected from the cholesteric liquid crystal layers 63₁ and 63₂ and the blue light reflected from the cholesteric liquid crystal layer 63₃ are mixed, thereby generating white display color due to additive mixture of color stimuli. An example of a spectrum of white light obtained by mixing red light and blue light is shown in Fig. 7.

when the cholesteric liquid crystal layers 63₁ and 63₂ are in the planar state, and the cholesteric liquid crystal layer 63₃ is in the focal conic state, the display color becomes red. When the cholesteric liquid crystal layers 63₁ and 63₂ are in the focal conic state, and the cholesteric liquid crystal layer 63₃ is in the planar state, the display color becomes blue. When both the cholesteric liquid crystal layers 63₁ and 63₂ and the cholesteric liquid crystal layer 63₃ are in the focal conic state, the light is absorbed by the photoabsorption layer 64, and the display color becomes black.

The structure is a solid structure in which the ITO electrodes 62₄ and 62₅ and the cholesteric liquid crystal layer 63₃ are common to the respective segments 41₁ to 41₇ forming the display pattern. By having these common, a circuit for applying the voltage can be simplified, and the IC card can be produced at a low cost.

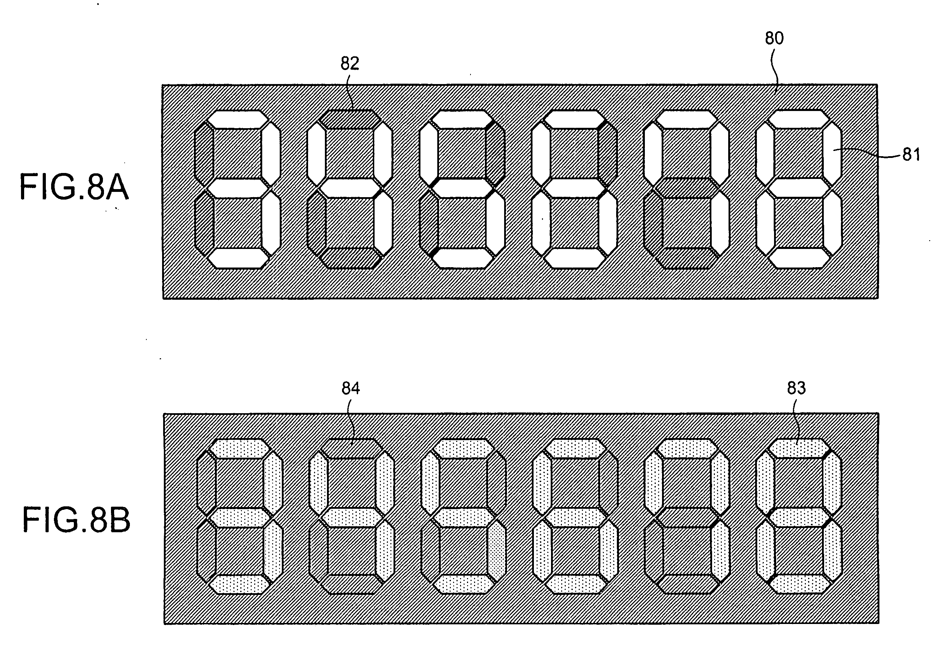

Figs. 8A and 8B are examples of color displays by the liquid crystal display according to the first embodiment. Fig. 8A indicates a case that the display color of numeric characters is white, and Fig. 8B indicates a case that the display color of numeric characters is red. In the case of Fig. 8A, a display pattern of numeric characters is formed of white 81 and blue 82 with respect to black 80 as a background color. The display by the white 81 can be realized by setting the cholesteric liquid crystal layers 63₁ and 63₂ and the cholesteric liquid crystal layer 63₃ to the planar state. The blue 82 exhibited by the reflected light of the cholesteric liquid crystal layer 63₃ is made dark as much as possible, so that the blue color is hardly distinguished from the background color of the black 80.

In the case of Fig. 8B, a display pattern of numeric characters is formed of red 83 and black 84 for the background color of the black 80. The display by the red 83 can be realized by setting the cholesteric liquid crystal layers 63₁ and 63₂ shown in Fig. 6 to the planar state and the cholesteric liquid crystal layer 63₃ to the focal conic state.

To increase the contrast of display, it is desired that the dominant wavelength of spectrum of red reflected light reflected by the cholesteric liquid crystal layers 63₁ and 63₂ is within a range from 570 to 640 nanometers, and the reflecting band of the reflected light is wide. Furthermore, it is desired that the dominant wavelength of spectrum of blue reflected light reflected by the cholesteric liquid crystal layer 63₃ is within a range from 450 to 500 nanometers, and the reflecting band of the reflected light is narrow.

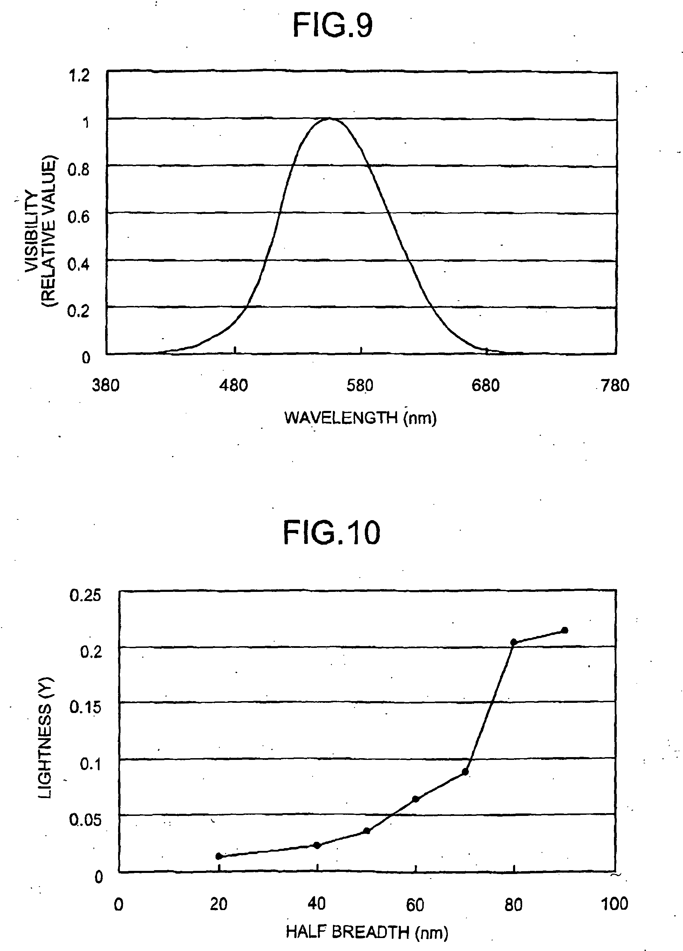

Fig. 9 is a graph of a visibility curve expressing human visibility characteristics. As shown in Fig. 9, the human visibility has a peak roughly in 555 nanometers. That is, a color closer to the peak is felt brighter to the human eyes. Therefore, the dominant wavelength of the red reflected light constituting the display pattern is brought close to the 555 nanometer peak as much as possible and within a range from 570 to 640 nanometers. Furthermore, the dominant wavelength of the blue reflected light is kept away from the 555 nanometer peak as much as possible and within a range from 450 to 500 nanometers.

A relationship between a bandwidth of the reflecting band of reflected light and contrast of display is explained next. Fig. 10 depicts a relationship between lightness of the blue reflected light and a half breadth of spectrum of the blue reflected light. As shown in Fig. 10, as the half breadth of the blue reflected light becomes narrower, the lightness becomes lower. Therefore, by making the reflecting band of the blue reflected light narrow as much as possible, a dark display color can be obtained, and it is made difficult to distinguish the blue display color from the background color of the black 80 in Figs. 8A and 8B.

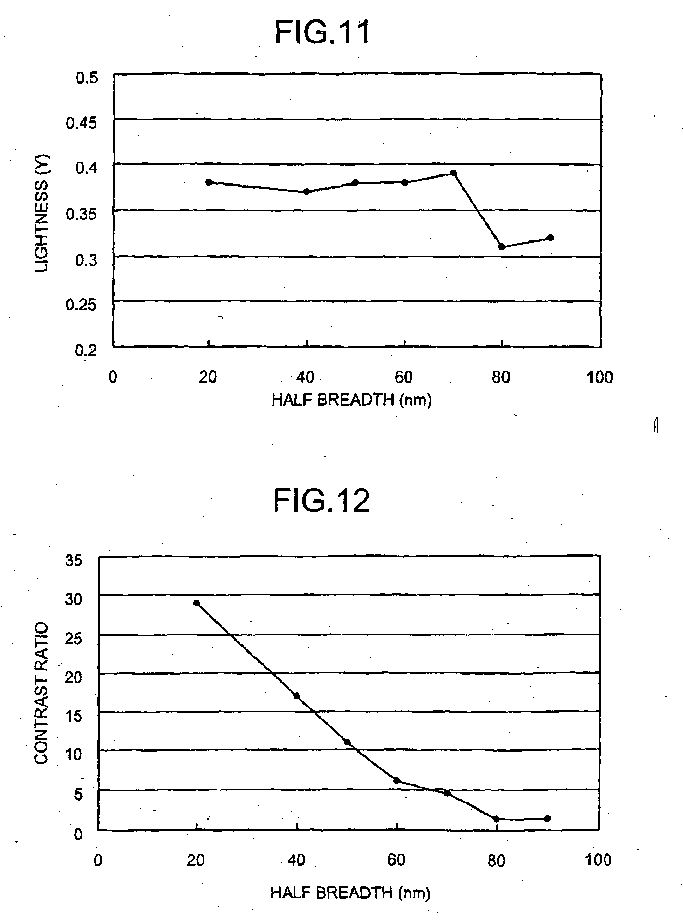

Fig. 11 depicts a relationship between lightness of white reflected light obtained by mixing red reflected light and blue reflected light and the half breadth of the blue reflected light. It is assumed here that the half breadth of the red reflected light (in a range half the peak reflectivity, and roughly with reflectivity of 20 to 25%) is about 90 nanometers. As shown in Fig. 11, it is seen that the lightness of the white reflected light can be made constant, even if the half breadth of the blue reflected light becomes narrow, and a bright display with white reflected light can be obtained.

Fig. 12 depicts a relationship between a contrast ratio of the white reflected light obtained by mixing red reflected light and blue reflected light to the blue reflected light and the half breadth of the blue reflected light. It is also assumed here that the half breadth of the red reflected light is about 90 nanometers. As shown in Fig. 12, it is seen that as the half breadth of the blue reflected light becomes narrower, the contrast ratio increases, and the visibility is improved. On the contrary, if the half breadth becomes equal to or larger than 70 nanometers, the contrast becomes less than 5, thereby deteriorating the visibility.

Thus, by making the reflecting band of the red reflected light wide and the reflecting band of the blue reflected light narrow, the display pattern can be clearly recognized. Furthermore, since the spectral luminous of blue decreases when the area of the blue area is small, the blue color can be made indistinctive on the liquid crystal display of the IC card.

Furthermore, the cholesteric liquid crystal layers 63₁ and 63₂ reflecting the red light can be formed of liquid crystal molecules having a helical structure reflecting the right-circularly polarized light and the cholesteric liquid crystal layer 63₃ reflecting the blue light can be formed of liquid crystal molecules having a helical structure reflecting the left-circularly polarized light. As a result, since right-circularly polarized components and left-circularly polarized components of light in the common wavelength range in the reflecting wavelength band of the cholesteric liquid crystal layers 63₁ and 63₂ and the reflecting wavelength band of the cholesteric liquid crystal layer 63₃ are reflected, a display pattern with high lightness can be obtained. The cholesteric liquid crystal layers 63₁ and 63₂ can reflect the left-circularly polarized light, and the cholesteric liquid crystal layer 63₃ can reflect the right-circularly polarized light.

Alternatively, the cholesteric liquid crystal layers 63₁ and 63₂ reflecting the red light can be formed by combining two layers, that is, the cholesteric liquid crystal layer reflecting the right-circularly polarized light and the cholesteric liquid crystal layer reflecting the left-circularly polarized light. The same thing applies to the cholesteric liquid crystal layer 63₃ reflecting the blue light.

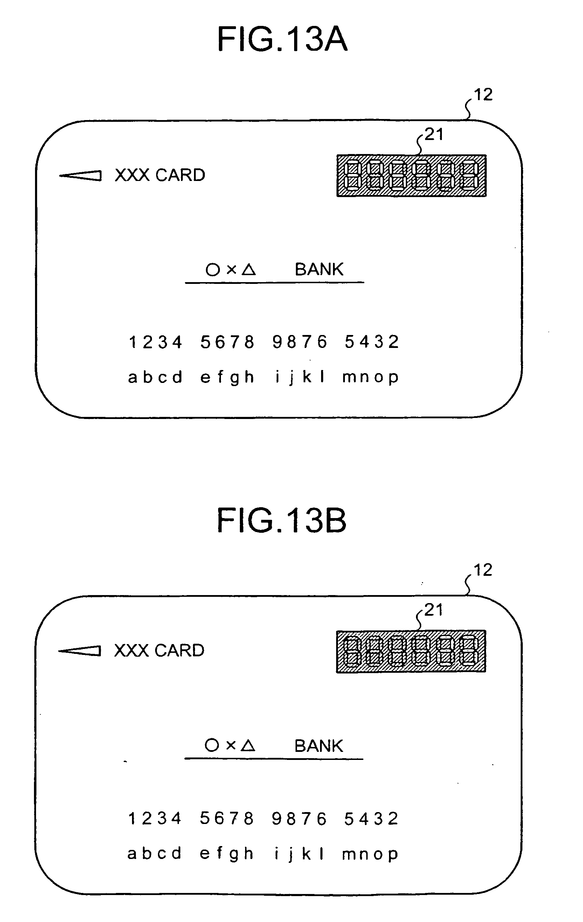

Figs. 13A and 13B are examples of displays by the liquid crystal display according to the first embodiment. An example of the IC card 12 that displays the balance of deposit in a bank is shown. Fig. 13A is a display example when the balance is equal to or more than a predetermined amount and a display pattern of numeric characters is displayed in white. Fig. 13B is a display example when the balance is less than the predetermined amount, and a display pattern of numeric characters is displayed in red.

Thus, the liquid crystal display 21 is formed so as to be capable of color display, and the balance is displayed in different colors based on whether a predetermined condition is satisfied, thereby drawing the attention of a user of the IC card 12. While an example of the IC card 12 for displaying the balance of deposit with respect to a bank or the like is shown, the technique can be also applied to the IC card that displays shopping points in a department store or the like.

A manufacturing method of the liquid crystal display according to the first embodiment is explained below. First, the cholesteric liquid crystal layers 63₁ and 63₂ are formed so that the dominant wavelength of the red light to be reflected is 480 nanometers, the half breadth of a reflection spectrum is about 70 nanometers, and only the right-circularly polarized light is reflected, by mixing a chiral agent causing a clockwise distortion to the liquid crystal molecules with a nematic liquid crystal material in an appropriate amount.

Furthermore, the cholesteric liquid crystal layer 63₃ is formed so that the dominant wavelength of the blue light to be reflected is 590 nanometers, the half breadth of the reflection spectrum is about 90 nanometers, and only the left-circularly polarized light is reflected, by mixing a chiral agent causing a counterclockwise distortion to the liquid crystal molecules with the nematic liquid crystal material in an appropriate amount. The thickness of the cholesteric liquid crystal layers 63₁ to 63₃ is set to about 5 micrometers, respectively.

The formed cholesteric liquid crystal layers 63₁ to 63₃ are clamped, as shown in Fig. 6, between the polymeric films 60₁ to 60₃ having a thickness of about 150 micrometers; on which the ITO electrodes 62₄ and 62₅ are deposited, and laminated. The photoabsorption layer 64 having a thickness of 1 to 5 micrometers is bonded to the bottom of the laminated layer, thereby forming the liquid crystal display 21 having the entire thickness of about 460 micrometers.

When a display was made by the liquid crystal display 21, chromaticity of white was (x, y)=(0.31, 0.33) in the Commission Internationale de I'Eclairage (CIE) color system, and lightness was Y=0,32, exhibiting favorable white. Furthermore, chromaticity of red was (x, y)=(0.57, 0.40), and lightness was Y=0.21, displaying favorable red.

At this time, the voltage applied to the cholesteric liquid crystal layers 63₁ to 63₃ was an AC pulse voltage for one cycle, with one cycle being 50 milliseconds. When the cholesteric liquid crystal layers 63₁ to 63₃ are set to the planar state, the voltage applied thereto was an AC pulse voltage having an amplitude of ±40 volts, and when the cholesteric liquid crystal layers 63₁ to 63₃ are set to the focal conic state, the voltage applied thereto was an AC pulse voltage having an amplitude of ±18 volts.

As explained above, in the first embodiment, the IC card 12 displays a predetermined type of information, by laminating the cholesteric liquid crystal layers 63₁ and 63₂ reflecting red light in the planar state and the cholesteric liquid crystal layer 63₃ reflecting blue light in the planar state, applying a voltage respectively to the laminated cholesteric liquid crystal layers 63₁ to 63₃, and changing the orientation of the cholesteric liquid crystals between the planar state and the focal conic state, to transmit or reflect light. As a result, the display color can be changed according to the displayed information, to improve the visibility, and the convenience of the IC card 12 can be further improved.

In the first embodiment, two cholesteric liquid crystal layers are laminated vertically. However, the present invention is not limited thereto, and three or more cholesteric liquid crystal layers can be laminated.

In the first embodiment, the laminated structure of the cholesteric liquid crystals is applied to the IC card with a liquid crystal display. However, the present invention is not limited thereto, and the similar technique can be applied to electronic paper technology for other applications.

In the first embodiment, an example where the cholesteric liquid crystal layers reflecting light having a different wavelength are laminated in two or more layers, to realize color display has been explained. However, at least two cholesteric liquid crystal layers reflecting light having a different wavelength can be laminated for each of the segments forming the display pattern, to realize color display. In a second embodiment, therefore, an example where color display is realized by arranging at least two cholesteric liquid crystal layers reflecting light having a different wavelength in parallel is explained.

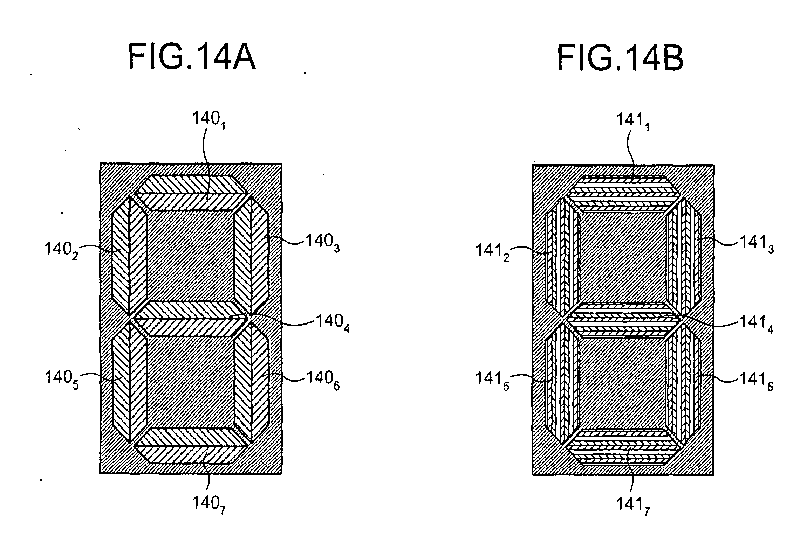

At first, the configuration of the liquid crystal display according to the second example is explained. Figs. 14A and 14B depict the configuration of the liquid crystal display according to the second example. Fig. 14A is a case that segments 140₁ to 140₇ forming a data display pattern are divided into two, respectively, and two cholesteric liquid crystal layers reflecting light, which is a complementary color to each other, in the planar state are arranged in parallel.

Fig. 14B is a case that segments 141₁ to 141₇ forming a data display pattern are divided into nine, respectively, and three cholesteric liquid crystal layers reflecting red light, three cholesteric liquid crystal layers reflecting green light, and three cholesteric liquid crystal layers reflecting blue light, in the planar state are arranged in parallel, such that the cholesteric liquid crystals reflecting light of the same color are not adjacent to each other.

In the case of Fig. 14A, by forming two cholesteric liquid crystal layers so as to reflect light of a color, which is complementary to each other, such as red and blue in the planar state, the reflected red light and blue light are mixed, and a white pattern can be displayed by juxtaposed mixture of color stimuli.

When one of the two cholesteric liquid crystal layers is set to the planar state, and the other is set to the focal conic state, the color of the display pattern becomes a color of light reflected by the cholesteric liquid crystal layer in the planar state, that is, red or blue. When the two cholesteric liquid crystal layers are in the focal conic state, the color of an underlayer arranged below the cholesteric liquid crystal layer is displayed. If it is assumed that the underlayer is the photoabsorption layer, the display color becomes black.

Thus, by dividing the segments 140₁ to 140₇ forming the information display pattern into two, respectively, and arranging the two cholesteric liquid crystal layers reflecting light of a different color in parallel, display with four colors of white, red, blue, and black can be realized.

In the case of Fig. 14B, by forming cholesteric liquid crystals that reflect red light, green light, and blue light in the planar state, respectively, and arranging these liquid crystals in parallel, Red-Green-Blue (RGB) display can be realized, and the white pattern can be displayed by juxtaposed mixture of color stimuli.

Fig. 15 depicts the spectrum of red light, green light, and blue light reflected by the cholesteric liquid crystal layers. RGB display can be realized by arranging in parallel the cholesteric liquid crystal layers that reflect light of a wavelength 150 corresponding to blue, light of a wavelength 151 corresponding to green, and light of a wavelength 152 corresponding to red. In the RGB display, by respectively setting the respective cholesteric liquid crystals reflecting the red light, green light, and blue light, respectively, to the planar state or the focal conic state, white, cyan, magenta, yellow, red, green, blue, and black, that is, eight colors in total can be displayed:

The display color becomes black when the photoabsorption layer is arranged below the cholesteric liquid crystal layer, and all the cholesteric liquid crystal layers are in the focal conic state. The cholesteric liquid crystals can display neutral colors between a color in the planar state and a color in the focal conic state by mixing the planar state and the focal conic state. As a result, gradation of display can be increased.

As a method of performing the similar RGB display, a method of laminating three layers of cholesteric liquid crystal layers reflecting red, green, and blue in the planar state can be considered. In this case, however, manufacturing difficulty largely increases with such a limited thickness like the IC card, and the production cost increases. Therefore, the method according to the second embodiment is more suitable. In a color display method using a color filter, the use efficiency of light is poor, and the display becomes darker as compared to the method according to the second embodiment. Furthermore, in a method using reflective liquid crystals, since a liquid crystal device does not have the memory property, it is necessary to supply power at all times.

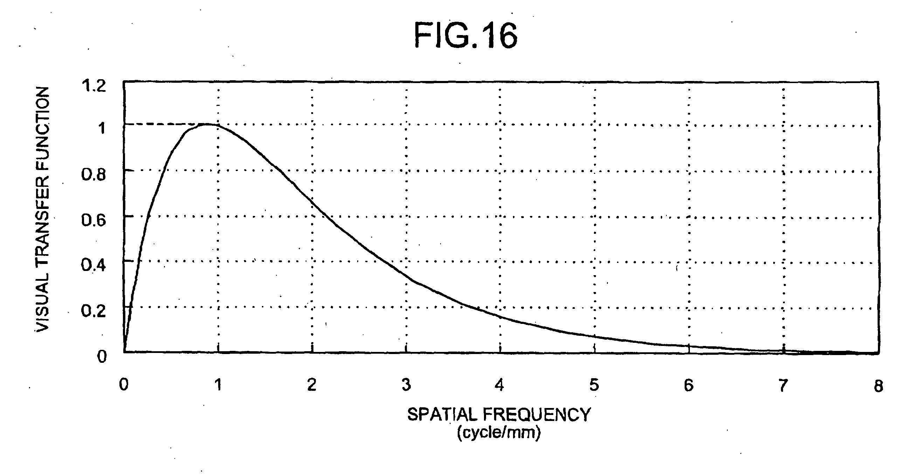

Fig. 16 depicts a visual transfer function with respect to a spatial frequency of a black and white striped pattern. The visual transfer function stands for a modular transfer function (MTF) with respect to human eyes, and a function expressing a response characteristic of eyes, when a resolution chart is seen at a distance of 35 centimeters. The spatial frequency on an X axis stands for repeated time of the black and white striped pattern within a width of 1 millimeter. For example, 5 Cycle/mm indicates that the black and white pattern is repeated five times within 1 millimeter width.

As shown in Fig. 16, in the visual transfer function, sensitivity has a peak when the spatial frequency is 0.79 Cycle/mm (when it is converted to the width of one black pattern, (1ö0.79)ö2=0.633 mm), and the sensitivity decreases gradually as the spatial frequency increases. When the sensitivity decreases, black and white contrast is not sensed gradually, and the pattern is sensed as a gray pattern.

The visual transfer function shown in Fig. 16 is with respect to the black and white striped pattern, and the sensitivity of eyes slightly decreases with respect to a chromatic color pattern. However, when the width of the cholesteric liquid crystal layer reflecting respective colors in the planar state is about 1 millimeter or less, respective colors reflected by the cholesteric liquid crystals arranged in parallel appear to be mixed according to an observation in a normal posture.

The liquid crystal display capable of color display is equipped in the IC card on which the balance of deposit in a bank is displayed, or the IC card on which shopping points in a department store or the like is displayed. When the balance of deposit or the shopping points satisfies a predetermined condition, display is made with a different color, thereby drawing attention of the user of the IC card, and improving the convenience of the IC card.

In Figs. 14A and 14B, while an example where numeric characters are displayed has been explained, if the segment is the one corresponding to the display pattern of characters like alphabet, the display color can be changed for each word to be displayed, and the convenience of the IC card can be further improved.

A manufacturing method of the liquid crystal display shown in Fig. 14B is explained next. At first, cholesteric liquid crystals, respectively reflecting in the planar state light having a dominant wavelength from 450 to 490 nanometers inclusive (corresponding to red), light having a dominant wavelength from 530 to 570 nanometers inclusive (corresponding to green), and light having a dominant wavelength from 610 to 650 nanometers inclusive (corresponding to blue) are formed by mixing an appropriate amount of chiral agent to the nematic liquid crystals. More preferably, the dominant wavelength of the reflected light corresponding to red is about 480 nanometers, the dominant wavelength of the reflected light corresponding to green is about 550 nanometers, and the dominant wavelength of the reflected light corresponding to blue is about 620 nanometers. At this time, by adjusting drive voltages of the respective cholesteric liquid crystal layers so as to become equal, the circuit can be manufactured at a low cost. The thickness of the cholesteric liquid crystal layers is about 5 micrometers.

The voltage to be applied to the respective cholesteric liquid crystal layers is an AC pulse voltage with one cycle being 50 milliseconds, and when the cholesteric liquid crystal layers are set to the planar state, the AC pulse voltage has an amplitude of ±40 volts, and when the cholesteric liquid crystal layers are set to the focal conic state, the AC pulse voltage has the amplitude value of ±18 volts.

In the second example, at least two cholesteric liquid crystal layers, respectively, reflecting light of a different wavelength in the planar state are arranged in parallel, for each of the segments 140₁ to 140₇ or 141₁ to 141₇ forming the data display pattern, the orientation of the cholesteric liquid crystals are changed by applying a voltage to the cholesteric liquid crystal layers arranged in parallel, so as to transmit or reflect light, thereby displaying predetermined information. Accordingly, the display color can be changed corresponding to the displayed data, to improve the convenience of the IC card.
Furthermore, an IC card with a liquid crystal display capable of color display with high lightness can be manufactured at a low cost.

In the second example, the parallel structure of the cholesteric liquid crystals is applied to the IC card with the liquid crystal display, however, the present invention is not limited thereto, and the similar technique can be applied to the electronic paper technology for other applications. Furthermore, the parallel structure explained in the second example can be applied likewise not only to the liquid crystal display using the cholesteric liquid crystals but also to other display methods, like an electrophoretic method and a twist ball method.

An example where at least two cholesteric liquid crystal layers reflecting light of a different wavelength are laminated or arranged in parallel to display single data by color display has been explained in the first and the second embodiments. However, the IC card can be formed such that a plurality of data display is performed simultaneously to further improve the convenience. In a third embodiment, therefore, an example where the IC card displays a plurality of data simultaneously is explained.

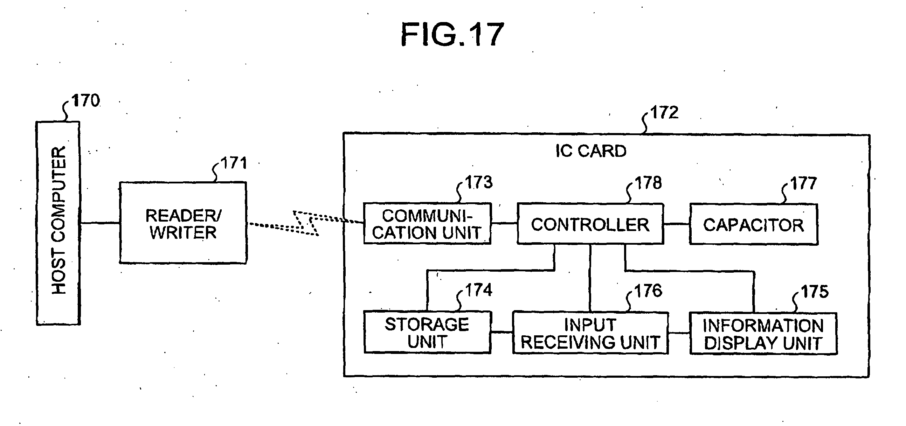

The configuration of the IC card system according to the third embodiment is first explained. Fig. 17 is a block diagram of the configuration of the IC card according to the third embodiment. Like functional units as in the IC card system explained witch reference to Fig. 1 are not explained here in detail.

As shown in Fig. 17, the IC card system includes a host computer 170, a reader/writer 171, and an IC card 172. The IC card 172 is a card type device having a built-in IC chip, and transfers various data between the reader/writer 171 and the IC card 172. The IC card 172 can also perform data processing such as operation and storage of the received data.

The IC card 172 according to the present invention can display in color the content of data received from the reader/writer 171, the operation result, and stored data. At this time, different types of data can be displayed in color simultaneously, thereby further improving the convenience of the IC card 172.

As shown in Fig. 17, the IC card 172 has a communication unit 173, a storage unit 174, an information display unit 175, an input receiving unit 176, a capacitor 177, and a controller 178. The communication unit 173 performs data communication with the reader/writer 171. The storage unit 174 stores data received from the reader/writer 171 and results of data operation.

The information display unit 175 displays in color data received from the reader/writer 171, data stored in the storage unit 174, or a plurality of data such as an error message simultaneously, by using the cholesteric liquid crystal layers. The input receiving unit 176 is an input device such as a button for switching a display mode of data displayed by the information display unit 175 between single data display and plural data display. The input receiving unit 176 has a dedicated input/output channel for controlling the display of the information display unit 175, and can dead data from the storage unit 174 and change over the display, without using the controller 178 that controls the entire IC card. As a result, high-speed data display is realized.

The capacitor 177 is a power unit that accumulates radio energy transmitted from the reader/writer 171 and supplies power to the IC card 172. By accumulating power in the capacitor 177, the IC card 172 can change over the display between the single data display and the plural data display, even when the communication with the reader/writer 171 is not performed. The controller 178 transmits various control signals to the respective functional units 173 to 177, to control the entire IC card 172.

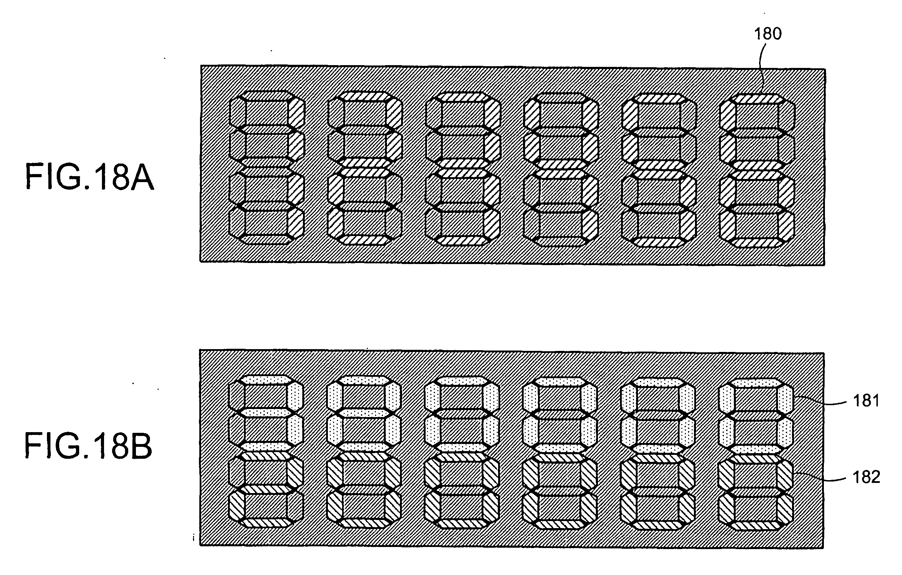

The data display method according to the third embodiment is explained bellow. Figs. 18A and 18B are conceptual diagrams for explaining the data display method according to the third embodiment. On the liquid crystal display in the third embodiment, 14 segments are arranged in each numerical place so that numeric patterns can be displayed in upper and lower rows. Fig. 18A is an example where one numeric data 180 "123456" is displayed by using the liquid crystal display. Fig. 18B is an example where two numeric data 181 and 182, "380000" and "200000" are displayed by using the liquid crystal display. When the two numeric character data 181 and 182 are displayed, the visibility can be improved by displaying the upper and lower rows with a different color.

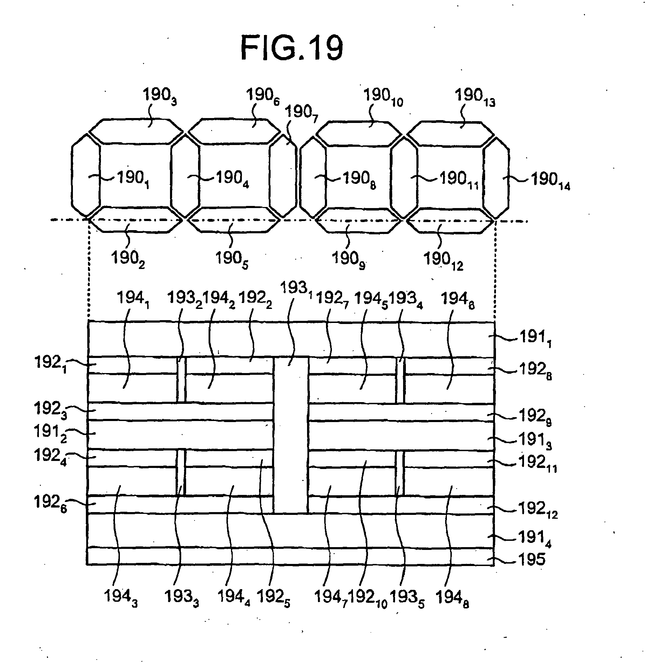

The structure of a liquid-crystal display relating to the third example is explained next. Fig. 19 depicts the structure of such a liquid-crystal display, not itself an embodiment. In Fig. 19, a plan view of respective segments 190₁ to 190₁₄ forming the information display pattern, and a cross section cut along a line (one-dot chain line) passing through the segments 190₂, 190₅, 190₉, and 190₁₂ are shown. Like parts in Fig. 6 are not explained here in detail.

As shown in the cross section in Fig. 19, the liquid-crystal display has polymeric films 191₁ to 191₄, ITO electrodes 192₁ to 192₁₂, separation layers 193₁ to 193₅, cholesteric liquid crystal layers 194₁ to 194₈, and a photoabsorption layer 195.

The polymeric films 191₁ to 191₄ are transparent film substrates, on the surface of which any one of the ITO electrodes 192₁ to 192₁₂ is formed. The ITO electrodes 192₁ to 192₁₂ are electrodes that apply voltage to the cholesteric liquid crystal layers 194₁ to 194₈. The separation layers 193₁ to 193₅ separate the ITO electrodes 192₁, 192₂, 192₄, 192₅, 192₇, 192₈, 192₁₀, and 192₁₁, and the cholesteric liquid crystal layers 194₁ to 194₈. The cholesteric liquid crystal layers 194₁ to 194₈ are liquid-crystal layers that reflect light of a predetermined wavelength in the planar state, and transmit light in the focal conic state. The photoabsorption layer 195 absorbs light having penetrated the cholesteric liquid-crystal layers 194₁ to 194₈ and exhibits black color.

The cholesteric liquid crystal layers 194₁, 1942, 194₅, and 194₆ are formed so as to reflect light with a wavelength of green in the planar state. Preferably, if the dominant wavelength of the reflected light is in a range from 530 to 570 nanometers inclusive, bright display can be obtained.

The cholesteric liquid crystal layers 194₃ and 194₄ are formed so as to reflect light with a wavelength of blue in the planar state, and the cholesteric liquid crystal layers 194₇ and 194₈ are formed so as to reflect light with a wavelength of red in the planar state. If the dominant wavelength of the blue reflected light is in a range from 450 to 490 nanometers inclusive, and the dominant wavelength of the red reflected light is in a range from 610 to 650 nanometers inclusive, when being mixed with the green reflected light, the mixed degree of colors becomes preferable.

By independently applying the voltage to the cholesteric liquid crystal layers 194₁ and 194₈ and setting respective cholesteric liquid crystal layers to the planar state or the focal conic state, numeric characters can be displayed on the segments 190₁ to 190₇ and 190₈ to 190₁₄ with a different color.

Specifically, when the cholesteric liquid crystal layers 194₁ and 194₂ and the cholesteric liquid crystal layers 194₃ and 194₄ are in the planar state, green and blue are mixed and the display color becomes cyan. When the cholesteric liquid crystal layers 194₅ and 194₆ and the cholesteric liquid crystal layers 194₇ and 194₈ are in the planar state, green and red are mixed and the display color becomes magenta. Since cyan and magenta are opposite colors, the both displays are clearly distinguished from each other due to the contrast effect of colors to be displayed simultaneously, thereby improving the visibility.

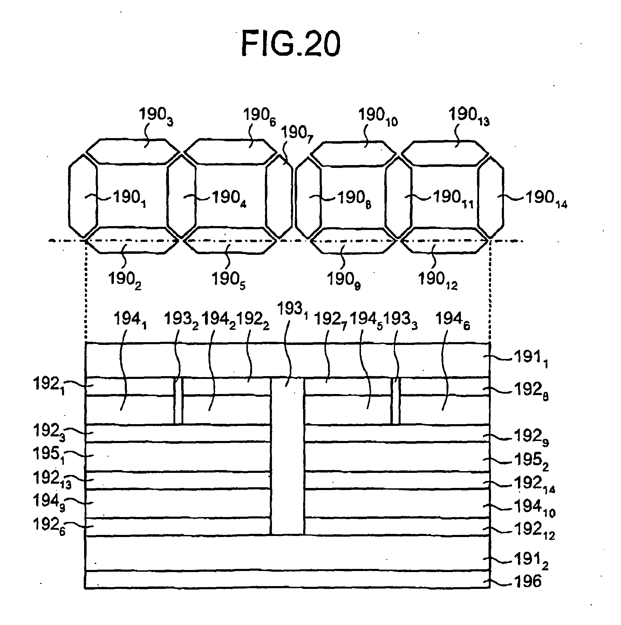

Fig. 20 depicts a modified structure of the liquid-crystal display shown in Fig. 19. In the structure shown in Fig. 20, the ITO electrodes 192₄ and 192₅ in Fig. 19 are, in accordance with the invention, replaced by an ITO electrode 192₁₃ and the ITO electrodes 192₁₀ and 192₁₁ in Fig. 19 are replaced by an ITO electrode 192₁₄ having a solid structure. Furthermore, the cholesteric liquid crystal layers 194₃ and 194₄ in Fig. 19 are replaced by a cholesteric liquid crystal layer 194₉ having a solid structure, and the cholesteric liquid crystal layers 194₇ and 194₈ in Fig. 19 are replaced by a cholesteric liquid crystal layer 194₁₀ having a solid structure.

Thus, since the ITO electrodes 192₄ and 192₅, the ITO electrodes 192₁₀ and 192₁₁, the cholesteric liquid crystal layers 194₃ and 194₄, and the cholesteric liquid crystal layers 194₃ and 194₄ have the solid structure, a circuit for switching the orientation of the cholesteric liquid crystals can be simplified, and the IC card can be manufactured at a low cost.

When the cholesteric liquid crystal layers 194₁ and 194₂ and the cholesteric liquid crystal layer 194₉ are in the planar state, among the segments 190₁ to 190₇ forming the numerical display pattern, segments other than the portion forming a figure are displayed in blue, which is the opposite color of the cholesteric liquid crystal layer 194₉. When the cholesteric liquid crystal layers 194₅ and 194₆ and the cholesteric liquid crystal layer 194₁₀ are in the planar state, among the segments 190₈ to 190₁₄ forming the numerical display pattern, segments other than the portion forming a figure are displayed in red, which is the opposite color of the cholesteric liquid crystal layer 194₁₀.

Accordingly, by setting the wavelength band of the blue reflected light and the red reflected light to the wavelength band in a near ultraviolet region and a near infrared region, respectively, corresponding to the opposite ends of the visibility curve shown in Fig. 9, visibility of the blue reflected light and the red reflected light in the portions other than the display pattern decreases, thereby increasing the contrast between the numerical portion and other portions.

Furthermore, if the cholesteric liquid crystal layers 194₁, 194₂, 194₅, and 194₆ reflecting green light are formed by liquid crystal molecules having a helical structure reflecting the right-circularly polarized light, and the cholesteric liquid crystal layers 194₃ and 194₄ reflecting blue light and the cholesteric liquid crystal layers 194₇ and 194₈ reflecting red light are formed by liquid crystal molecules having a helical structure reflecting the left-circularly polarized light, the right-circularly polarized components and the left-circularly polarized components of light in the common wavelength range in the reflecting wavelength band of the upper and lower cholesteric liquid crystal layers are reflected. As a result, a display pattern with high lightness can be obtained. The cholesteric liquid crystal layers 194₁, 194₂, 194₅, and 194₆ can reflect the left-circularly polarized light, and the cholesteric liquid crystal layers 194₃, 194₄, 194₇, and 194₈ can reflect the right-circularly polarized light.

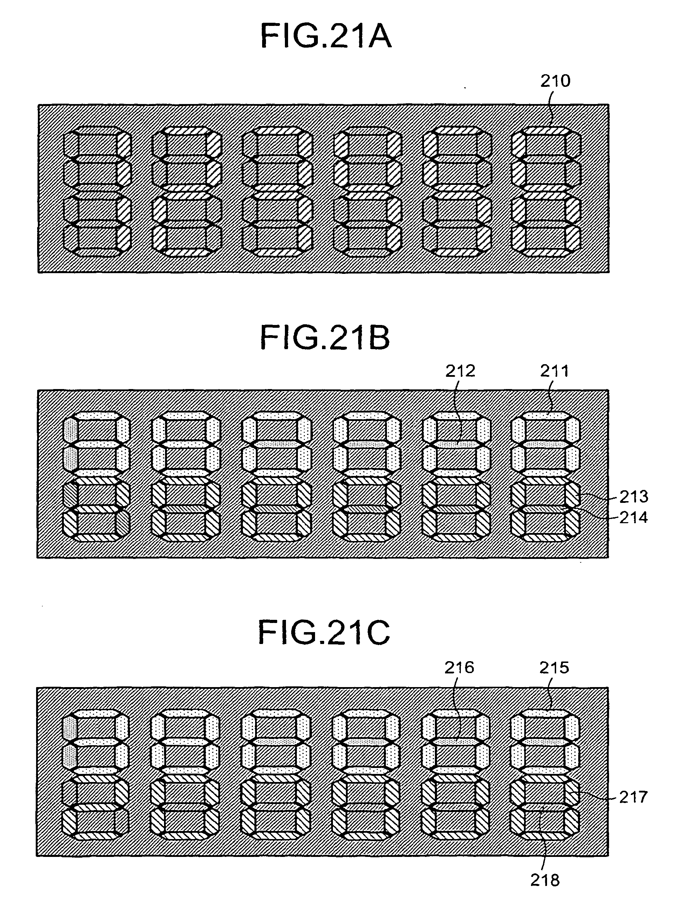

Figs. 21A, 21B and 21C are examples of switching displays for switching from single data display to two data display by using the liquid crystal display shown in Fig. 20.- As shown in Fig. 21A, in a first display mode, single data is displayed in green 210 by using upper and lower 14 segments 190₁ to 190₁₄ shown in Fig. 19 or Fig. 20. When a display switching instruction is received by the input receiving unit 176 shown in Fig. 17, the display is switched to the one shown in Fig. 21B or 21C.

Fig. 21B indicates a case that two data are displayed with display colors of cyan 211 and magenta 213. Portions other than the numerical part are displayed with blue 212 and red 214. Fig. 21C indicates a case that two data are displayed with display colors of cyan 215 and green 217. In this case, portions other than the numerical part are displayed with blue 216 and black 218. Since the green 217 and the black as the background intermingle well, a combination of colors as shown in Fig. 21C is appropriate.

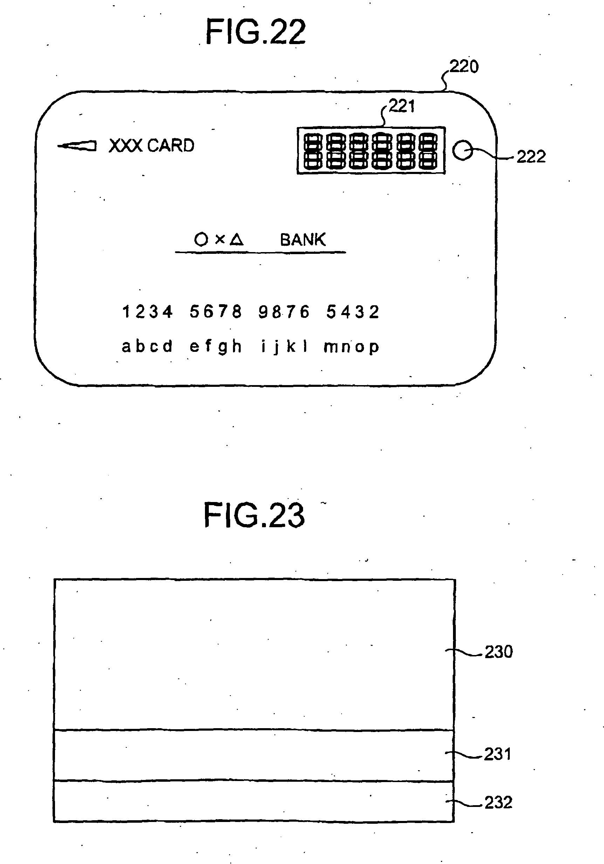

Fig. 22 is an overview of an IC card 220 having a liquid crystal display 221 shown in Figs. 20 or 21A to 21C. The IC card 220 has the liquid crystal display 221 that can switch the display between single data display and two data display, and a display switch button 222 for instructing the switchover.

By pressing the display switch button 222, the user of the IC card 220 can switch the display. For example, when the display switch button 222 is pressed once, single data display is performed, and when the display switch button 222 is pressed again, two data display is performed. When the display switch button 222 is pressed again, the display is deleted.

According to the third embodiment, the input receiving unit 176 that receives input of switching request for changing the display from the single data display to simultaneous multiple data display is provided. Upon reception of the input of a display switching request, the information display unit 175 switches the display from the single data display to simultaneous multiple data display. Accordingly, a plurality of data can be immediately confirmed, thereby improving the convenience of the IC card 220.

In the third embodiment, a case that single data display and two data display are switched by pressing the display switch button 222 has been explained. However, the present invention is not limited thereto, and switchover of display can be performed by rotating a rotary dial. By using the rotary dial instead of the display switch button 222, it can be prevented that the display switch button 222 is unexpectedly pressed, and unnecessary display is performed.

In this case, for example, when the rotary dial is rotated once, single data is displayed, when the rotary dial is rotated again, two data is displayed, and when the rotary dial is rotated again, the display is deleted. A circuit for converting the rotation of the job dial to power can be provided, and the generated power is used for display.

In the third embodiment, power is supplied from the reader/writer 171, however, the present invention is not limited thereto, and power can be supplied by wired or wireless communication with another device such as a mobile phone and personal digital assistants (PDA). Furthermore, the IC card 172 can be equipped with a solar battery, and power is supplied from the solar battery. More preferably, if an apparatus that supplies power is provided in each area, so that power can be supplied easily anywhere, the convenience of the IC card 172 is largely improved.

Furthermore, in the third embodiment, the liquid crystal display having two cholesteric liquid crystal layers reflecting light of a different dominant wavelength is used to perform simultaneous display of a plurality of data. However, the present invention is not limited thereto, and when there is only one cholesteric liquid crystal layer, simultaneous display of a plurality of data can be performed with a single color.

In the first, the second, and the third embodiments above, the case that the IC card is equipped with the liquid crystal display using the cholesteric liquid crystals capable of color display has been explained. However, the visibility in a dark place can be improved by equipping a liquid crystal display with a luminous layer that emits light in a dark place and irradiates light to display surfaces of liquid crystals. Therefore, a liquid crystal display further equipped with the luminous layer is explained in a fourth embodiment.

The configuration of the liquid crystal display according to the fourth embodiment is explained first. Fig. 23 is a block diagram of the configuration of the liquid crystal display according to the fourth embodiment. The liquid crystal display has a cholesteric liquid crystal portion 230, a luminous layer 231, and a photoabsorption layer 232.

The cholesteric liquid crystal portion 230 is a liquid crystal display unit capable of color display as explained in the first to the third embodiments. However, the photoabsorption layer in the liquid crystal display explained in the first to the third embodiments is replaced by the photoabsorption layer 232. The luminous layer 231 is a transparent layer formed of a luminous pigment or a noctilucent material that accumulates energy upon reception of photo irradiation, and emits light for about several tens minutes to several hours. The photoabsorption layer 232 absorbs light and exhibits black.

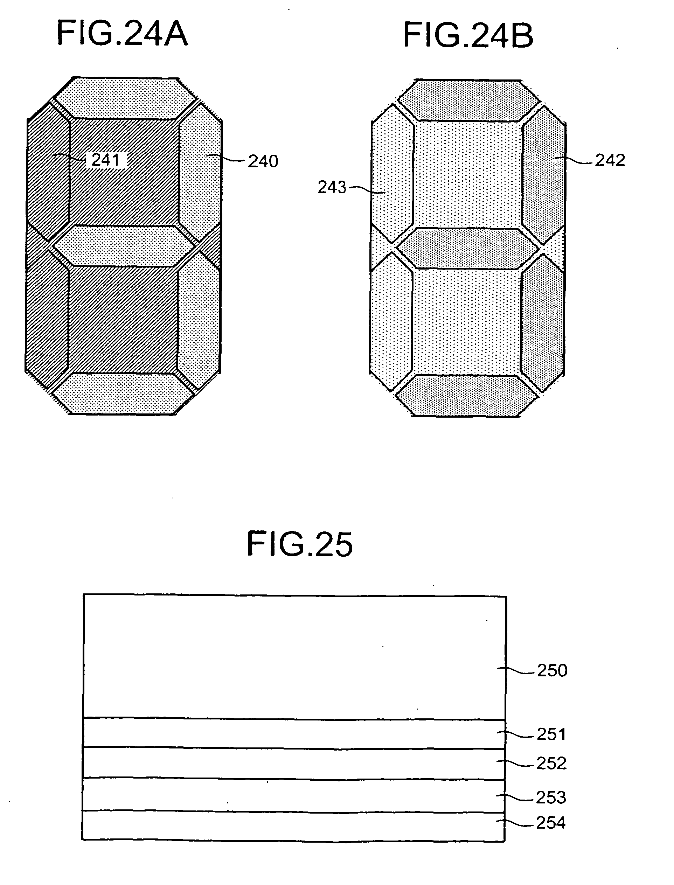

Figs. 24A and 24B are examples of displays by the liquid crystal display having the luminous layer 231. Fig. 24A is a display example displaying a figure "3" in a bright place, and Fig. 24B is a display example displaying a figure "3" in a dark place.

In Fig. 24A, the luminous layer 231 is accumulating light energy, and irradiation from the luminous layer 231 hardly attracts human attention. For example, when the cholesteric liquid crystal portion 230 is formed so as to reflect only light with a wavelength of green 240, portions other than the numerical portions become black 241 due to the photoabsorption layer 232.

In Fig. 24B, when the cholesteric liquid crystal portion 230 is formed so as to reflect only light with a wavelength of green 240, light with a wavelength of green 240 is reflected, among the lights emitted from the luminous layer 231. Since it is a dark place, the amount of light entering from outside is small. Therefore, the display of the numerical portion becomes darker green 242, as compared to the green 240 in Fig. 24A. However, the portions other than the display pattern become bright since the light emitted from the luminous layer 231 is transmitted, and the light and shade are inverted with respect to the display shown in Fig. 24A, and the display can be recognized sufficiently even in a dark place.

In this case, the dominant wavelength of light emitted from the luminous layer 231 is made to match the dominant wavelength of light reflected by the cholesteric liquid crystal portion 230. Furthermore, the wavelength band of light emitted from the luminous layer 231 is made to be wider as much as possible than the wavelength band of light reflected by the cholesteric liquid crystal portion 230. Accordingly, contrast between the display pattern and the portions other than the display pattern can be increased, thereby enabling improvement in visibility.

A liquid crystal display obtained by improving the liquid crystal display equipped with the luminous layer 231 shown in Fig. 23 is explained next. Fig. 25 depicts a configuration of the liquid crystal display improved by using a quarter-wave plate 251 and a polarizing plate 252. As shown in Fig. 25, the liquid crystal display has a cholesteric liquid crystal portion 250, the quarter-wave plate 251, the polarizing plate 252, a luminous layer 253, and a photoabsorption layer 254.

The cholesteric liquid crystal portion 250 is a liquid crystal display capable of color display as shown in the first to the third embodiments. However, the photoabsorption layer in the liquid crystal display shown in the first to the third embodiments is replaced by the photoabsorption layer 254. The quarter-wave plate 251 is a wave plate that converts plane polarized light to the right-circularly polarized light or the left-circularly polarized light. The polarizing plate 252 converts light to the plane polarized light. The luminous layer 253 is a transparent layer formed of a luminous pigment or a noctilucent material that accumulates energy upon reception of photo irradiation, and emits light for about several tens minutes to several hours. The dominant wavelength of light emitted therefrom substantially matches the dominant wavelength of light reflected by the cholesteric liquid crystal portion 250. The photoabsorption layer 254 absorbs light and exhibits black.

Thus, the polarizing plate 252 and the quarter-wave plate 251 are arranged above the luminous layer 253, so that the light emitted from the luminous layer 253 is converted to the right-circularly polarized light or the left-circularly polarized light, and the cholesteric liquid crystal portion 250 is formed so as to reflect the right-circularly polarized light or the left-circularly polarized light in the planar state. When the cholesteric liquid crystal portion 250 is in the planar state, the light emitted from the luminous layer 253 is reflected by the cholesteric liquid crystal portion 250. Accordingly, the display pattern becomes darker, and portions other than the display pattern become brighter due to the light emitted from the luminous layer 253, thereby further increasing the contrast between the display pattern and other portions, and improving the visibility.

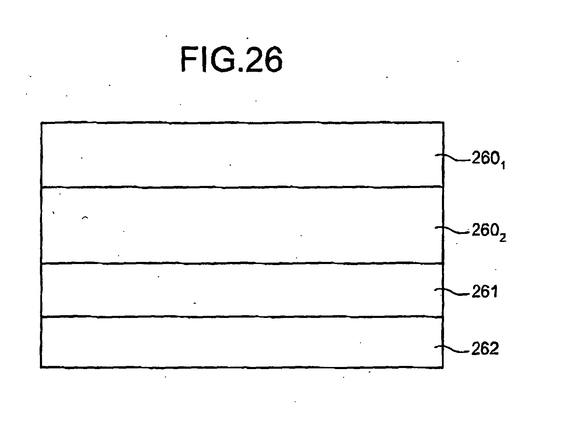

Fig. 26 depicts a configuration of the liquid crystal display having a cholesteric liquid crystal layer 260₁ that reflects right-circularly polarized light and a cholesteric liquid crystal layer 260₂ that reflects left-circularly polarized light. As shown in Fig. 26, the liquid crystal display has the cholesteric liquid crystal portions 260₁ and 260₂, a luminous layer 261, and a photoabsorption layer 262.

The cholesteric liquid crystal portions 260₁ and 260₂ are respectively a liquid crystal display unit capable of color display as shown in the first to the third embodiments. However, the photoabsorption layer in the liquid crystal display shown in the first to the third embodiments is replaced by the photoabsorption layer 262. Furthermore, the cholesteric liquid crystal portion 260₁ is formed so as to reflect only the right-circularly polarized light, and the cholesteric liquid crystal portion 260₂ is formed so as to reflect only the left-circularly polarized light. The luminous layer 261 is a transparent layer formed of a luminous pigment or a noctilucent material that accumulates energy upon reception of photo irradiation, and emits light for about several tens minutes to several hours. The dominant wavelength of light emitted therefrom substantially matches the dominant wavelength of light reflected by the cholesteric liquid crystal portion 250. The photoabsorption layer 262 absorbs light and exhibits black.

Thus, by arranging the cholesteric liquid crystal portions 260₁ and 260₂ that reflect the right-circularly polarized light and the left-circularly polarized light, in a bright place, right-circularly polarized components and left-circularly polarized components in the light in the common wavelength range in the reflecting wavelength band of the upper and lower cholesteric liquid crystal portions 260₁ and 260₂ are both reflected, thereby obtaining a clear display pattern.

The cholesteric liquid crystal portion 260₁ reflects the right-circularly polarized light and the cholesteric liquid crystal portion 260₂ reflects the left-circularly polarized light. However, the cholesteric liquid crystal portion 260₁ can reflect the left-circularly polarized light and the cholesteric liquid crystal portion 260₂ can reflect the right-circularly polarized light.

In a dark place, a screen factor of light emitted from the luminous layer 261 is largely improved, and the display pattern becomes darker. As a result, contrast between the display pattern and other portions can be increased further, thereby improving the visibility. In this case, different from the configuration of the liquid crystal display shown in Fig. 25, the visibility can be improved without requiring the quarter-wave plate 251 and the polarizing plate 252.

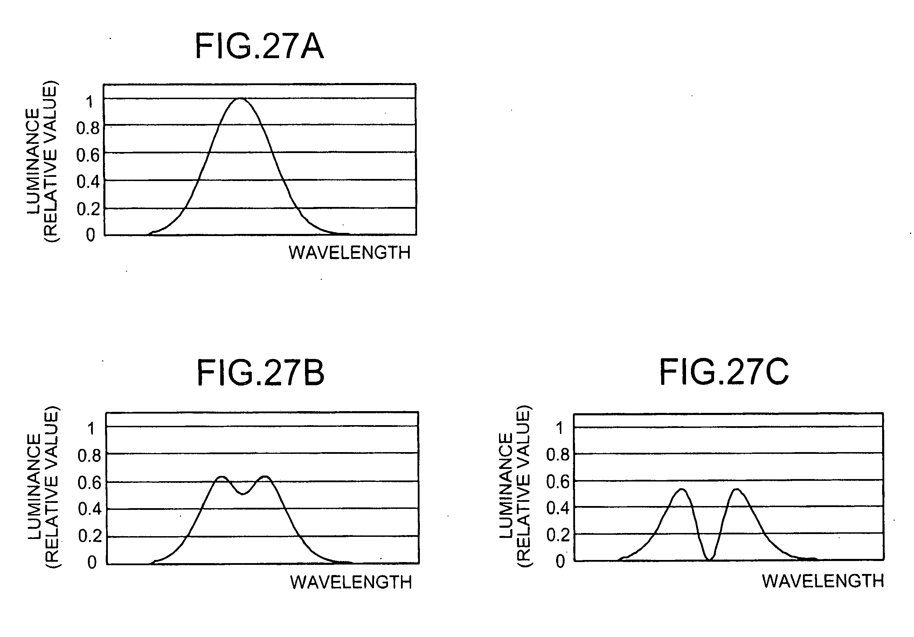

Figs 27A, 27B and 27C depict a spectrum of light emitted from a luminous layer in a dark place and having penetrated the cholesteric liquid crystal portion. Fig. 27A is an example of the spectrum of light in the portion other than the display pattern, that is, a spectrum example of light emitted from the luminous layer, and most of the light emitted from the luminous layer penetrates the cholesteric liquid crystal portion in the portions other than the display pattern. Fig. 27B depicts the spectrum of light in the display pattern portion, that is, a spectrum when light indicating the peak wavelength in Fig. 27A penetrates the cholesteric liquid crystal portion 260₂ reflecting the left-circularly polarized light. In this case, substantially half the light indicating the peak wavelength in Fig. 27A is reflected.

Fig. 27C depicts the spectrum of light in the display pattern portion as in Fig. 27B, that is, a spectrum when the light indicating the peak wavelength in Fig. 27A penetrates both the cholesteric liquid crystal portion 260₂ that reflects left-circularly polarized light and the cholesteric liquid crystal portion 260₁ that reflects right-circularly polarized light. In this case, most part of the light indicating the peak wavelength in Fig. 27A is reflected. Therefore, by arranging both the cholesteric liquid crystal portion that reflects right-circularly polarized light and the cholesteric liquid crystal portion that reflects left-circularly polarized light, the contrast between the display pattern and non-display pattern can be increased further, thereby improving the visibility.

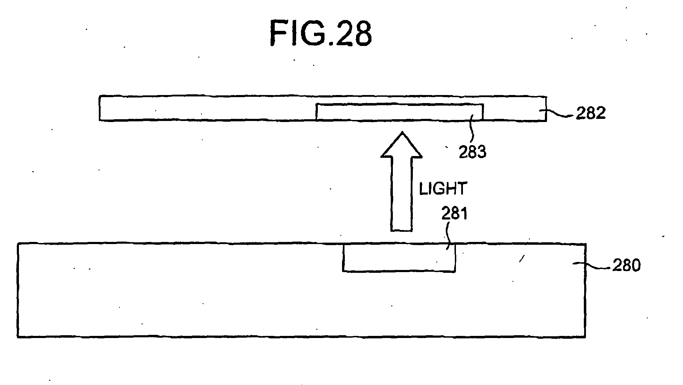

A method by which the IC card is supplied with light energy from the reader/writer is explained next. Fig. 28 depicts a method by which the IC card is supplied with light energy from the reader/writer. A case that an IC card 282 is raised above a reader/writer 280, so that the IC card 282 can communicate with the reader/writer 280 is shown in Fig. 28. The reader/writer 280 has a light source 281 that supplies light energy to the IC card 282. On the other hand, in the IC card 282, the luminous layer 261 equipped in a liquid crystal display 283 accumulates the energy of light irradiated from the reader/writer 280, and emits light by using the energy in a dark place. Thus, every time the IC card 282 communicates with the reader/writer 280, light energy can be accumulated reliably.

According to the fourth embodiment, the luminous layer 261 that accumulates light energy and emits light by using the energy is provided, and the light emitted from the luminous layer 261 is irradiated to the cholesteric liquid crystal portion. Furthermore, the reflecting dominant wavelength of light emitted from the luminous layer 261 is substantially equal to the reflecting dominant wavelength of light reflected from the cholesteric liquid crystal portions 230, 250, 260₁, and 260₂ in the planar state. As a result, an IC card equipped with a liquid crystal display having high visibility even in a dark place can be realized.

In the fourth embodiment, the luminous layer is provided in the liquid crystal display using the cholesteric liquid crystals. However, the present invention is not limited thereto, and the luminous layer can be provided in other display methods, such as the electrophoretic method and the twist ball method.

In the fourth embodiment, the luminous layer is provided in a liquid crystal display having two cholesteric liquid crystal portions reflecting light of a different dominant wavelength. However, the present invention is not limited thereto, and the luminous layer can be provided when there are three or more cholesteric liquid crystal portions, or when there is only one cholesteric liquid crystal portion.

In the first to fourth embodiments, to shift the orientation of the liquid crystal molecules in the cholesteric liquid crystal layers to the planar state or to the focal conic state, an AC pulse voltage in which the polarity is reversed in positive and negative and the absolute value of amplitude is the same is used. However, in the liquid crystal display equipped in the IC card, since rewriting frequency of the display pattern is fewer than in the liquid crystal display used for other applications, a voltage waveform different from that of the AC pulse voltage can be used. In the fifth embodiment, therefore, a case that a voltage waveform optimized for an application to the IC card is used to drive the liquid crystal display is explained.

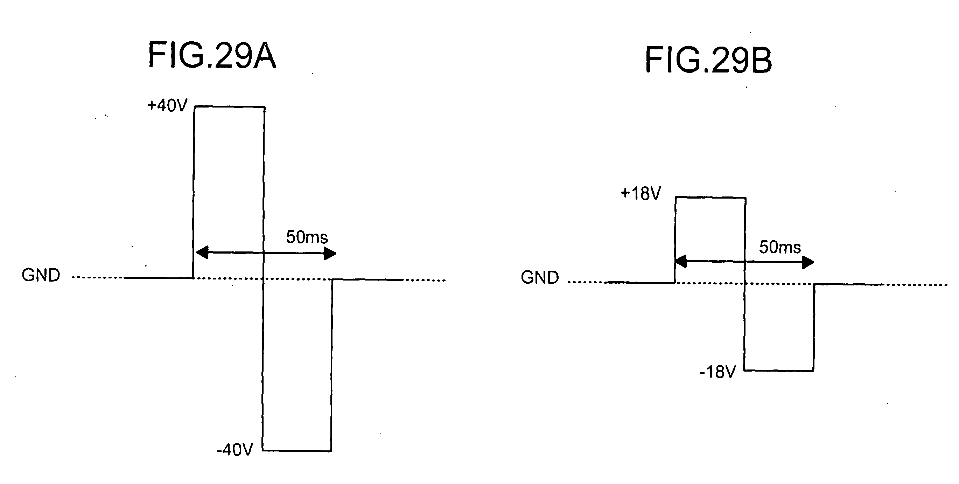

The AC pulse voltage in which the polarity is reversed in positive and negative and the absolute value of amplitude is the same is explained first. Figs. 29A and 29B are examples of the AC pulse voltages in which the polarity is reversed in positive and negative and the absolute value of amplitude is the same. Fig. 29A depicts an AC pulse voltage to be applied when the state of the cholesteric liquid crystal layer is shifted from the focal conic state to the planar state. In this case, an AC pulse voltage having amplitude of ±40 volts is applied to the cholesteric liquid crystal layer in a width of 50 milliseconds. Fig. 29B depicts an AC pulse voltage to be applied when the state of the cholesteric liquid crystal layer is shifted from the planar state to the focal conic state. In this case, an AC pulse voltage having amplitude of ±18 volts is applied to the cholesteric liquid crystal layer in a width of 50 milliseconds.

The reason why the pulse width of the AC pulse voltage is set to about 50 milliseconds is that it is necessary to apply a pulse voltage having a pulse width of about 50 milliseconds or more to shift the state to the planar state or to the focal conic state sufficiently, although it depends on the material.

Thus, it is to prevent deterioration due to the ionic substance in the cholesteric liquid crystals being polarized why the AC pulse voltage in which the polarity is reversed in positive and negative and the absolute value of amplitude is the same is applied. However, to apply the AC pulse voltage as shown in Fig. 29A, a voltage driving circuit having a breakdown voltage margin of 80 volts or higher is required, thereby increasing the production cost of the IC card. Therefore, a pulse voltage having a waveform capable of reducing the breakdown voltage margin of the voltage driving circuit is shown below.

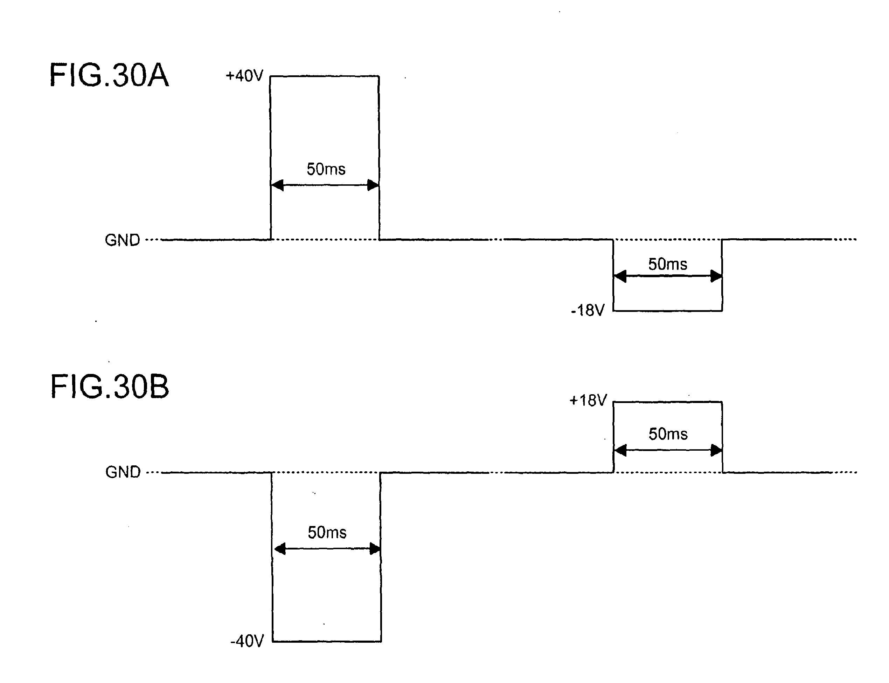

Figs. 30A and 30B are examples of DC pulse voltages to be applied to the cholesteric liquid crystal layer. Fig. 30A is a DC pulse voltage having a positive polarity, which is applied when the state of the cholesteric liquid crystal layer is shifted from the focal conic state to the planar state. Fig. 30A is a DC pulse voltage having a negative polarity, which is applied when the state of the cholesteric liquid crystal layer is shifted from the planar state to the focal conic state. The pulse waveforms in Fig. 30A have opposite polarity, and by applying the pulse voltage whose polarity is reversed every time the state is shifted, the breakdown voltage margin of the voltage driving circuit can be reduced.

Furthermore, as shown in Fig. 30B, the polarity of the DC pulse voltage to be applied when the state is shifted from the focal conic state to the planar state can be made negative, and in Fig. 30A, the polarity of the DC pulse voltage to be applied when the state is shifted from the planar state to the focal conic state can be made positive.

The waveform shown in Figs. 30A and 30B is of the DC pulse voltage, and hence, the effect of suppressing deterioration due to polarization of the cholesteric liquid crystals is small as compared to the AC pulse voltage shown in Figs. 29A and 29B. However, in the liquid crystal display of the IC card, since the display rewriting frequency is not as high as in the liquid crystal display, there is no practical problem.

For example, in a liquid crystal display like a Super Twisted Nematic (STN) display, if it is assumed that display is performed on average for one hour per day with 30 frames per second, the pulse voltage is applied about 40,000,000 times per one pixel in one year. On the other hand, the display rewriting frequency of the IC card is assumed to be about 10,000 times in a whole period during which the IC card is used, and the display is not rewritten at a frequency of 30 frames per second as in the liquid crystal display. Accordingly, even the method of using the DC pulse voltage as shown in Figs. 30A and 30B is sufficiently practical.

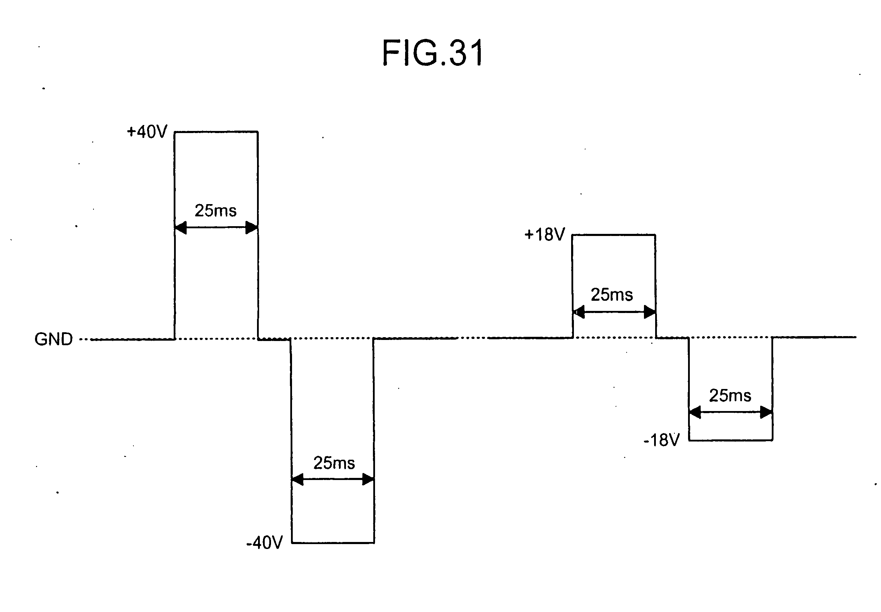

Fig. 31 is an example of an AC pulse voltage having an interval during which a voltage is not applied at the time of reversing the polarity. Fig. 31 depicts an AC pulse voltage to be applied when the state of the cholesteric liquid crystal layer is shifted from the focal conic state to the planar state, and an AC pulse voltage to be applied when the state is shifted from the planar state to the focal conic state.

In Fig. 31, the respective AC pulse voltages have an interval during which the voltage is not applied at the time of reversing the polarity. This interval is set to be about 10 milliseconds or less before the orientation change of the liquid crystal molecules progresses. This is because the pulse width of the AC pulse voltage in which the polarity is reversed in positive and negative should be about 50 milliseconds or more, to sufficiently shift the state to the planar state or the focal conic state. However, if the interval is 10 milliseconds or more, the pulse width forms two short independent DC pulse voltages, and hence, it becomes difficult to shift the state. By using the AC pulse voltage having such a waveform, a voltage value does not largely change from a positive value to a negative value as shown in Figs. 29A and 29B, and hence, the breakdown voltage margin of the voltage driving circuit can be made small.

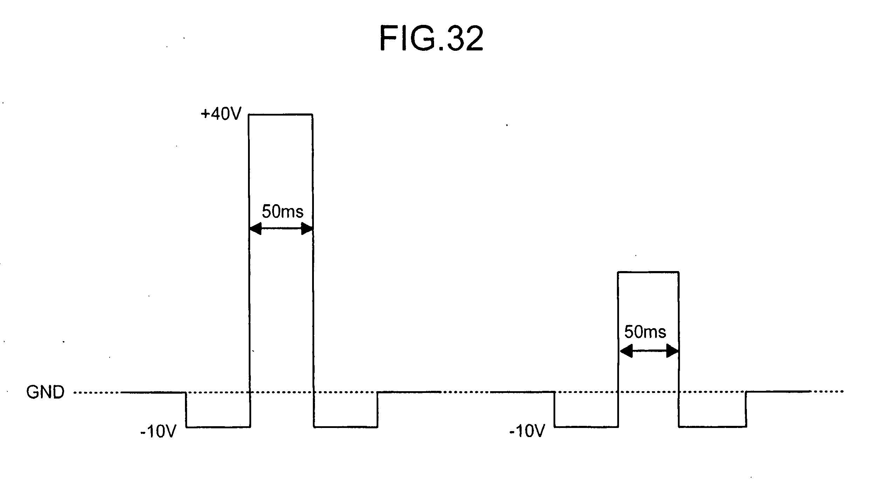

Fig. 32 is an example of an AC pulse voltage having different positive/negative voltage amplitudes. Fig. 32 depicts an AC pulse voltage to be applied when the state is shifted from the focal conic state to the planar state, and an AC pulse voltage to be applied when the state is shifted from the planar state to the focal conic state.

In Fig. 32, it is assumed that a positive amplitude value of the voltage is equal to or higher than the voltage value (the voltage value V₄ shown in Fig. 5) required for shifting the state from the focal conic state to the planar state, and the absolute value of a negative amplitude value of the voltage is smaller than the voltage value. In Fig. 32, it is assumed that the positive amplitude value of the voltage is a voltage value within a range required for shifting the state from the planar state to the focal conic state (a voltage value within the range from V₂ to V₃ shown in Fig. 5), and the absolute value of the negative amplitude value of the voltage is smaller than the voltage value. As a result, the breakdown voltage margin of the voltage driving circuit can be reduced, and deterioration due to polarization of the cholesteric liquid crystals can be suppressed.

In Fig. 32, two negative voltage pulses are applied before and after one positive voltage pulse. However, to reduce the cost of the voltage driving circuit further, only one negative voltage pulse can be applied. In Fig. 32, the polarity of the AC pulse voltage to be applied when the state is shifted from the focal conic state to the planar state, and the polarity of the AC pulse voltage to be applied when the state is shifted from the planar state to the focal conic state are made the same, however, these polarities can be opposite.

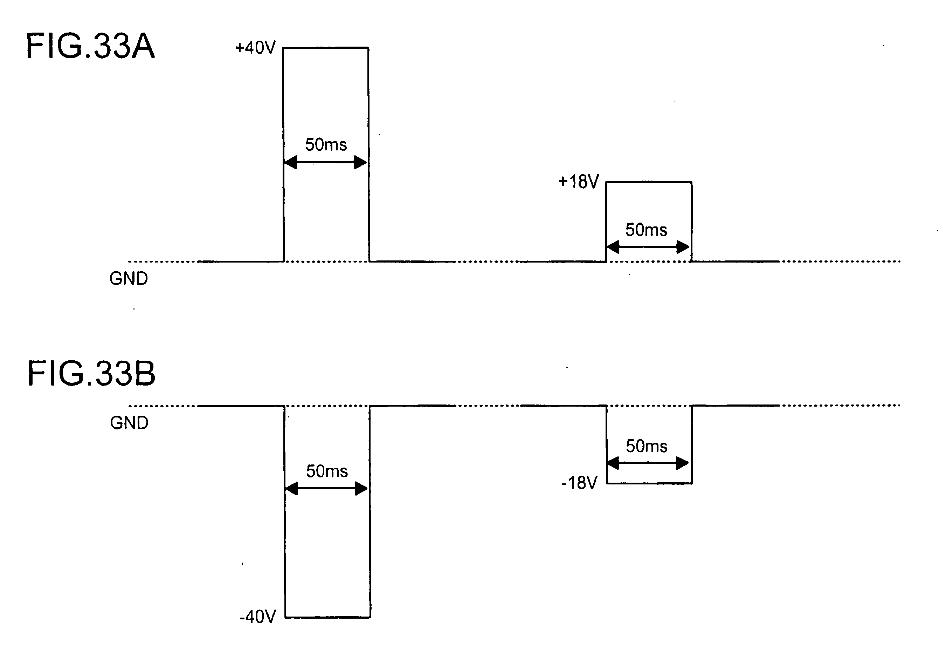

Figs. 33A and 33B are examples of DC pulse voltages having a different polarity according to the display rewriting frequency on the liquid crystal display. Fig. 33A depicts a DC pulse voltage having the positive polarity to be applied for shifting the state from the focal conic state to the planar state, when the rewriting frequency is even, and a DC pulse voltage having the positive polarity to be applied for shifting the state from the planar state to the focal conic state, when the rewriting frequency is even.

Fig. 33B depicts a DC pulse voltage having the negative polarity to be applied for shifting the state from the focal conic state to the planar state, when the rewriting frequency is odd, and a DC pulse voltage having the negative polarity to be applied for shifting the state from the planar state to the focal conic state, when the rewriting frequency is odd. Hereafter, every time the display is rewritten, the DC pulse voltage having the positive polarity shown in Fig. 33A, and the DC pulse voltage having the negative polarity shown in Fig. 33B are applied alternately.

Thus, by alternately changing the polarity of the DC pulse voltage to be applied according to the rewriting frequency, the breakdown voltage margin of the voltage driving circuit can be reduced, and deterioration due to polarization of the cholesteric liquid crystals can be suppressed.

The rewriting frequency is stored in the storage unit included in the IC card, or in the storage unit included in the reader/writer, which communicates with the IC card. When the IC card stores the rewriting frequency, the reader/writer reads the rewriting frequency data from the IC card, and for example, when the rewriting frequency is even, radio wave for controlling such that the display is rewritten by a DC pulse voltage having the positive polarity is emitted. When the rewriting frequency is odd, radio wave for controlling such that the display is rewritten by a DC pulse voltage having the negative polarity is emitted. Thereafter, the IC card increments the rewriting frequency stored in the storage unit by 1.

When the reader/writer stores the rewriting frequency, rewriting frequencies of many and unspecified IC cards are accumulated and stored. In this case, there is the possibility that the DC pulse voltage having the same polarity is applied to the same IC card twice continuously. However, from a long-term point of view, since the probability that the DC pulse voltage having the positive polarity is applied and the probability that the DC pulse voltage having the negative polarity is applied are fifty-fifty, there is no practical problem.

Furthermore, if the method of using the pulse waveform shown in Figs. 30A and 30B or the method of using the pulse waveform shown in Fig. 32 is combined with the method of determining the polarity of voltage to be applied according to the display rewriting frequency shown in Figs. 33A and 33B, deterioration caused due to polarization of the cholesteric liquid crystals can be effectively suppressed.

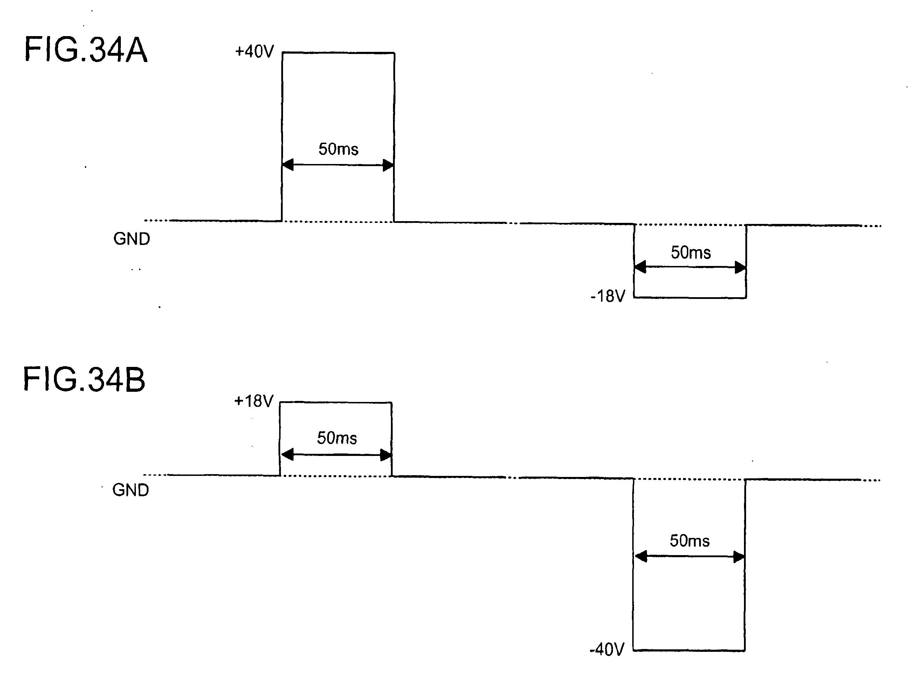

Figs. 34A and 34B are examples of DC pulse voltages to be applied at the time of rewriting the display in two stages. Fig. 34A depicts a DC pulse voltage having the positive polarity to be applied to reset all display segments to the planar state, and a DC pulse voltage having the negative polarity to be applied to shift the planar state to the focal conic state to form a predetermined display pattern. Furthermore, Fig. 34B depicts a DC pulse voltage having the positive polarity to be applied to reset all display segments to the focal conic state, and a DC pulse voltage having the negative polarity to be applied to shift the focal conic state to the planar state to form a predetermined display pattern.

Thus, by applying the DC pulse voltage having a different polarity in two stages, to reset the cholesteric liquid crystals and form the display pattern, the breakdown voltage margin of the voltage driving circuit can be reduced, and deterioration due to polarization of the cholesteric liquid crystals can be suppressed.

As explained above, in the fifth embodiment, rewriting of display is performed by using a DC pulse voltage, an AC pulse voltage having an interval during which the voltage is not applied at the time of reversing the polarity, or an AC pulse voltage having different amplitude in the positive and negative polarities, using the fact that the rewriting frequency of the display pattern on the liquid crystal display of the IC card is low. As a result, the breakdown voltage margin of the voltage driving circuit can be reduced, and deterioration due to polarization of the cholesteric liquid crystals can be suppressed.

In the fifth embodiment, the liquid crystal display is applied to the IC card, however, the present invention is not limited thereto, and the similar technique can be applied to the electronic paper technology for other applications. Furthermore, the number of cholesteric liquid crystal layers constituting the liquid crystal display can be plural so that display can be made in a plurality of colors as shown in the first or the second embodiment, or can be single.

In the first to the fifth embodiment, when the display is rewritten by shifting the state of the cholesteric liquid crystal layer from the planar state to the focal conic state, or from the focal conic state to the planar state, the display is rewritten by applying a voltage only once. However, since an application of voltage pulse in a plurality of times makes the state transition more complete, voltage can be applied to the cholesteric liquid crystal layer in a plurality of times. In a sixth embodiment, therefore, a case that predetermined display is made by applying a voltage to the cholesteric liquid crystal layer in a plurality of times is explained.

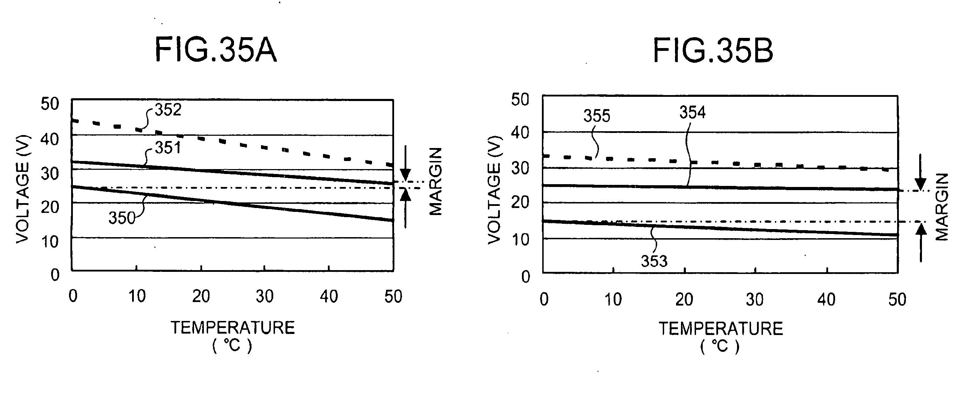

A relationship between voltage and temperature required for shifting the state of the cholesteric liquid crystals is first explained. Generally, in the cholesteric liquid crystals, as the temperature becomes lower, the viscosity increases, and the applied voltage required for shifting the state increases. Figs. 35A and 35B depict the relationship between voltage and temperature required for shifting the state of the cholesteric liquid crystals.

Fig. 35A depicts the relationship when the pulse width of the AC pulse voltage to be applied for shifting the state of the cholesteric liquid crystals is 10 milliseconds, where the range put between solid lines 350 and 351 is a voltage range in which the cholesteric liquid crystals are in the focal conic state, and a range having a voltage value larger than a dotted line 352 is a voltage range in which the cholesteric liquid crystals are in the planar state.

Fig. 35B depicts the relationship when the pulse width of the AC pulse voltage to be applied for shifting the state of the cholesteric liquid crystals is 50 milliseconds, where the range put between solid lines 353 and 354 is a voltage range in which the cholesteric liquid crystals are in the focal conic state, and a range having a voltage value larger than a dotted line 355 is a voltage range in which the cholesteric liquid crystals are in the planar state.

As shown in Figs. 35A and 35B, temperature dependency of a voltage value required for changing the state becomes more noticeable, as the pulse width of the AC pulse voltage to be applied becomes smaller. Specifically, when the pulse width is 10 milliseconds as shown in Fig. 35A, the voltage margin for shifting to the focal conic state in a temperature range from 0 to 50°C is as narrow as from 25 to 26 volts, and the voltage value for shifting to the planar state is as large as 44 volts. On the other hand, when the pulse width is 50 milliseconds as shown in Fig. 35B, the voltage margin for shifting to the focal conic state in a temperature range from 0 to 50°C is as wide as from 15 to 24 volts, and the voltage value for shifting to the planar state is as small as 33 volts. Furthermore, if it is assumed that the pulse width is 100 milliseconds, the voltage margin for shifting to the focal conic state becomes wider, and the voltage value for shifting to the planar state decreases.

When the cholesteric liquid crystals are used for the liquid crystal display of the IC card or the like, it is necessary to form a thin cholesteric liquid crystal layer. When the cholesteric liquid crystal layer is thin, a voltage required for changing the state becomes low as a whole, and the voltage margin for shifting to the focal conic state as shown in Fig. 35A or 35B becomes narrow. Furthermore, the lightness of the display pattern decreases. Therefore, when the cholesteric liquid crystals are used for the liquid crystal display of the IC card or the like, it is desired that the pulse width of the pulse voltage to be applied is wide as much as possible.

When the pulse width is small, there are problems such as afterimage and a decrease in the display contrast. For example, in Fig. 35A, when the voltage to be applied to the cholesteric liquid crystals is 23 volts, the voltage is sufficient for shifting to the focal conic state at 50°C. However, if the temperature decreases to 0°C, the voltage is not enough for the state to be shifted completely to the focal conic state. Accordingly, when light penetrates the cholesteric liquid crystal layer, a part of the light is reflected by a part of cholesteric liquid crystals in the planar state, and hence, an image of the previous display pattern remains or the display contrast decreases.

When the state is shifted to the planar state, there can be a case that the applied voltage value is not sufficient to shift the state to the planar state completely. Therefore, when the light is reflected by the cholesteric liquid crystal layer, a part of the light is transmitted by a part of the cholesteric liquid crystals in the focal conic state, and hence, the lightness is not increased, and display contrast can decrease.

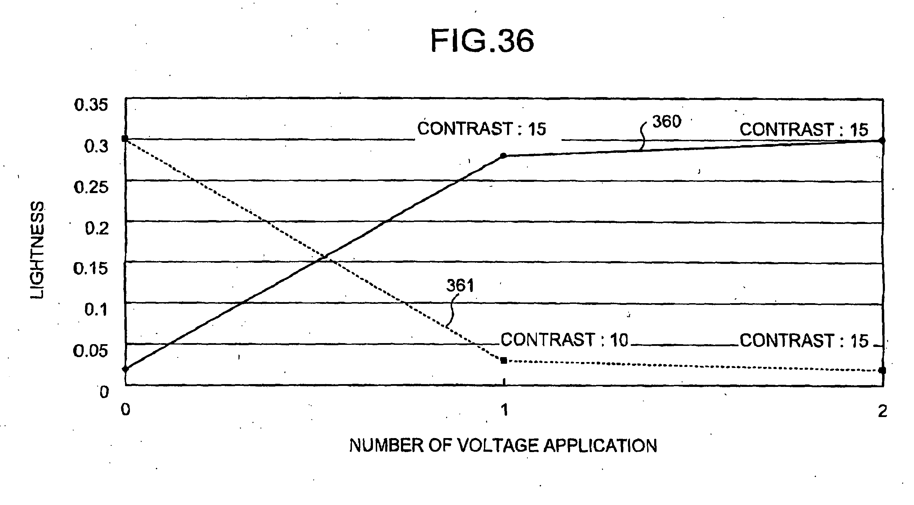

This problem can be improved by applying the voltage in a plurality of times. Fig. 36 depicts a relationship between the number of voltage application to the cholesteric liquid crystals and display lightness and contrast. In Fig. 36, a solid line 360 indicates a case that the state of the cholesteric liquid crystal layer is shifted from the focal conic state to the planar state by applying a voltage. In this case, with the first application of voltage, the lightness of reflected light reflected by the cholesteric liquid crystal layer is Y=0.28. With the second application of voltage, the lightness is improved to Y=0.30. Furthermore, the contrast is increased from 14 to 15.

A dotted line 361 indicates a case that the state of the cholesteric liquid crystal layer is shifted from the planar state to the focal conic state by applying a voltage. In this case, with the first application of voltage, the lightness of reflected light reflected by the cholesteric liquid crystal layer is Y=0.03. With the second application of voltage, the lightness decreases to Y=0.02. Furthermore, the contrast is increased from 10 to 15.

Thus, by increasing the number of voltage application, the lightness can be increased and the contract is further improved in the planar state, or the lightness decreased, and the contract is further improved in the focal conic state.

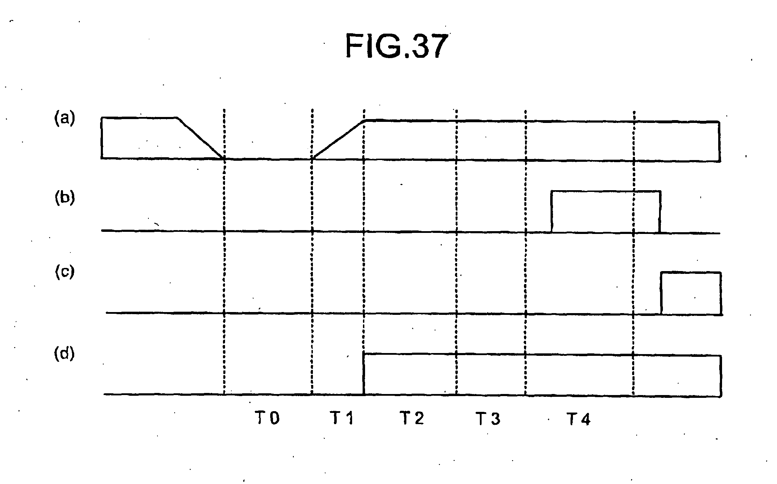

Initialization of the cholesteric liquid crystal layer when display is made on the liquid crystal display is explained next. Fig. 37 depicts timing charts of initialization timing of the cholesteric liquid crystals. The timing charts are based on ISO/IEC 10536, which is the International Standard. (a) in Fig. 37 indicates timing at which the reader/writer communicating with the IC card emits radio wave to transmit power to the IC card. (b) in Fig. 37 indicates timing at which the IC card transmits data to the reader/writer; (c) indicates timing at which the reader/writer transmits data to the IC card; and (d) indicates timing at which the IC card initializes the cholesteric liquid crystal layer in the liquid crystal display.

T0 is referred to as reset time, during which the reader/writer resets the influence of previous transmission of power, and during which power is not supplied to the IC card. T1 is referred to as maximum power rise time, which is required for the power to rise up to a value required for the IC card to perform processing. T2 is referred to as data transmission preparation time, which is time required for preparing communication for stabilizing the IC card, during which the reader/writer transmits a signal having a logical level of 1 to the IC card. T3 is referred to as stable logic time, during which the reader/writer transmits the signal having the logical level of 1 to the IC card, and the IC card transmits this signal to the reader/writer. T4 is referred to as maximum ATR transmission time, which is a time zone for the IC card to start transmission of Answer To Reset (ATR) for defining a transfer protocol to the reader/writer. However, the IC card can start the transmission of ATR during the data transmission preparation time at T2.

According to the standard of ISO/IEC 10536, T0 is defined as time equal to or more than 8 milliseconds, T1 as time equal to or less than 0.2 milliseconds, T2 as 8 milliseconds, T3 as 2 milliseconds, and T4 as 30 milliseconds.

Since the time from time T2 when the power of the IC card rises completely till startup of the operating system that controls the processing of the IC card finishes is normally about 100 milliseconds, the AC pulse voltage having a pulse width of 50 milliseconds as explained with reference to Figs. 35A and 35B can be sufficiently applied during this period. That is, as shown at (d) in Fig. 37, if the first application of voltage explained with reference to Fig. 36 is performed by using the time of about 100 milliseconds, the limited driving time of the IC card can be effectively used to improve the display contrast.

At time T2, the IC card receives a control signal for initializing the display pattern, together with a signal of logical level 1 transmitted from the reader/writer. A voltage is then applied to the cholesteric liquid crystal layer by using a voltage converted from the received radio wave, to initialize the display pattern. After initialization of the display pattern has finished, information transfer is started between the IC card and the reader/writer, and the second application of voltage is performed, to display predetermined data.

The pulse width of the AC pulse voltage to be applied for initialization can be about 50 milliseconds. However, as explained with reference to Figs. 35A and 35B, it is preferable to make the pulse width as long as possible, since the voltage margin for shifting the cholesteric liquid crystal layer to the focal conic state is widened, and the voltage value for shifting the cholesteric liquid crystal layer to the planar state decreases.

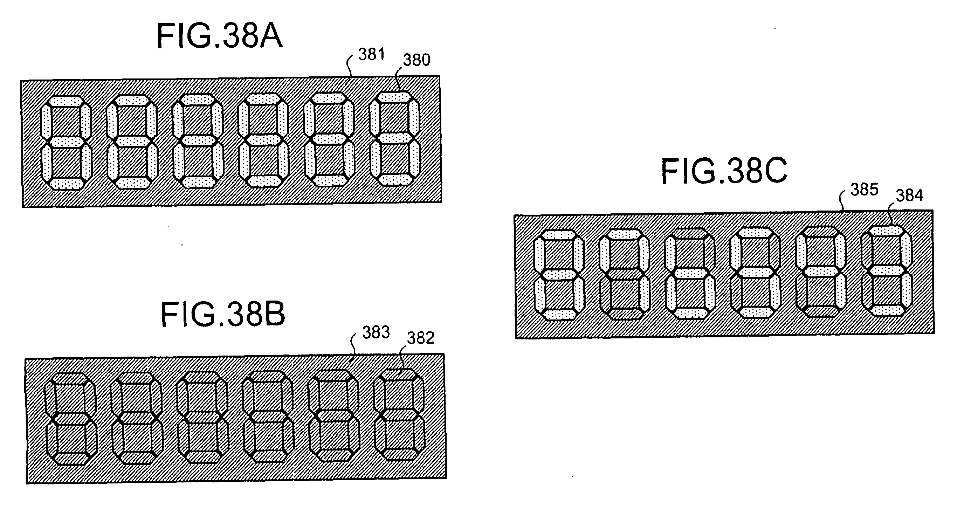

Figs. 38A, 38B and 38C depicts a display initialization process of the cholesteric liquid crystal layer. As shown in Figs. 38A-C, there are two methods to initialize the display. One is a method for setting the cholesteric liquid crystal layer corresponding to all segments 380 forming the display pattern to the planar state, as shown in Fig. 38A. The other is a method for setting the cholesteric liquid crystal layer corresponding to all segments 382 forming the display pattern to the focal conic state.

According to the method for setting cholesteric liquid crystal layer to the planar state, a voltage for setting the cholesteric liquid crystal layer to the planar state is applied at the timing shown at (d) in Fig. 37. As shown in Fig. 38C, after communication is started with the reader/writer, a voltage is applied again to the respective segments 384 for forming a predetermined display pattern based on the data received from the reader/writer, so that the planar state is maintained, or the state is shifted to the focal conic state. As explained with reference to Fig. 36, the segments applied with the voltage for setting the state to the planar state twice increases the lightness, thereby increasing the contrast with respect to a background color 385.

According to the method for making cholesteric liquid crystal layer to the focal conic state, a voltage for setting the cholesteric liquid crystal layer to the focal conic state is applied at the timing shown at (d) in Fig. 37. As shown in Fig. 38C, after communication is started with the reader/writer, a voltage is applied again to the respective segments 384 for forming a predetermined display pattern based on the data received from the reader/writer, so that the focal conic state is maintained, or the state is shifted to the planar state. As explained with reference to Fig. 36, the segments applied with the voltage for setting the state to the focal conic state twice decreases the lightness, thereby increasing the contrast with respect to the segments 384 forming the display pattern.

As explained above, in the sixth embodiment, initialization of the display pattern is started by achieving synchronization with the predetermined signal issued during initialization of communication with the reader/writer. Accordingly, the limited driving time of the IC card can be effectively used to initialize the display pattern.

Furthermore, initialization of the display pattern is executed by applying the voltage for setting the state of the cholesteric liquid crystals to the planar state or the focal conic state, and at the time of displaying the predetermined data, the voltage for setting the cholesteric liquid crystals to the same state as the state at the time of initialization is applied again to the display segments, which maintain the state of the cholesteric liquid crystals set by the initialization. Accordingly, the display contrast can be further increased.

Furthermore, in the sixth embodiment, the IC card with the liquid crystal display using the cholesteric liquid crystals starts initialization of the display pattern by achieving synchronization with the predetermined signal issued during initialization of communication with the reader/writer. However, the present invention is not limited thereto, and similar processing can be performed in other display methods, such as the electrophoretic method and the twist ball method.

The number of the cholesteric liquid crystal layers constituting the liquid crystal display can be plural so that display can be made in a plurality of colors as shown in the first or the second embodiment, or can be single.

In the first to the sixth embodiments, data communication is performed between the IC card and the reader/writer. However, the IC card can be constituted so as to notify the user of the IC card of the completion of communication, when the communication has finished. In a seventh embodiment, therefore, a case that the IC card notifies that the data communication with the reader/writer has finished is explained.

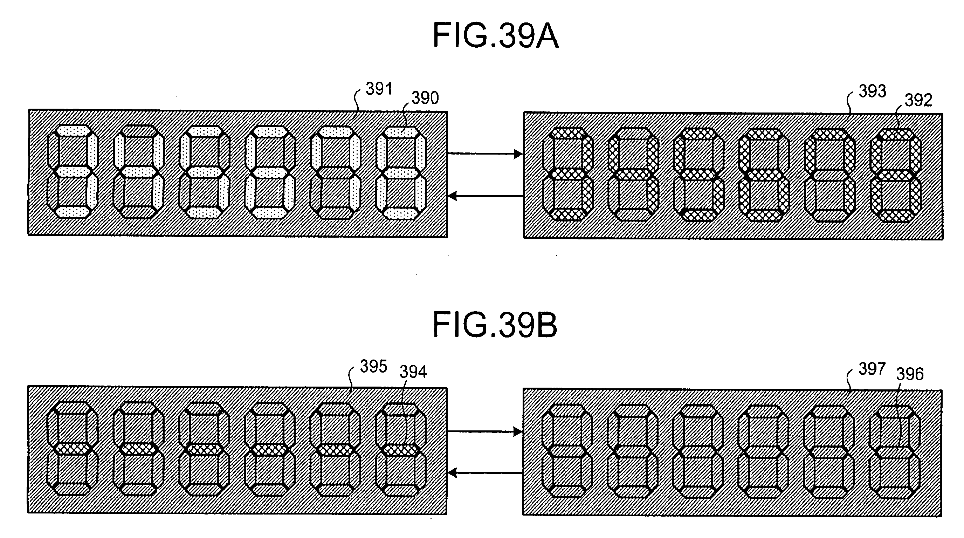

A notification process for notifying the user of completion of data communication by changing the display on the liquid crystal display is explained first. Figs. 39A and 39B depict the notification process for notifying the user of completion of data communication by changing the display on the liquid crystal display. Figs. 39A depicts display patterns changed over when the communication is performed normally. Figs. 39B depicts display patterns changed over when the communication is not performed normally.

For example, on the liquid crystal display having upper and lower two cholesteric liquid crystal layers as shown in Fig. 6, when the upper layer reflects red light in the planar state, and the lower layer reflects blue light in the planar state, in the normal display, only the upper layer becomes the planar state, and the data is displayed in green display color.

When the communication with the reader/writer has finished normally, by maintaining the upper layer in the planar state, and alternately changing the state of the lower layer between the planar state and the homeotropic state, display 390 with cyan, which is a color mixture of green and blue, and display 392 with green can be changed over. Accordingly, the user can be notified immediately and clearly that the communication has normally finished.

When the communication with the reader/writer has not finished normally, by maintaining the lower layer in the focal conic state, and alternately changing the state of the upper layer between the planar state and the homeotropic state, display 394 with green and display 396 for displaying nothing can be changed over. As a result, the user can be notified that the communication has not normally finished immediately and clearly. Particularly, in the case of a non-contact type IC card, when the IC card is away from the reader/writer, communication can be unstable. Therefore, by constituting the liquid crystal display of the IC card as described above, the convenience of the IC card can be further improved.

The IC card determines that an abnormality has occurred when data from the reader/writer is not received for predetermined time. The card control IC that controls the IC card generates an interruption signal, and the liquid crystal display control IC controls so as to perform a flash display as shown in Figs. 39A and 39B.

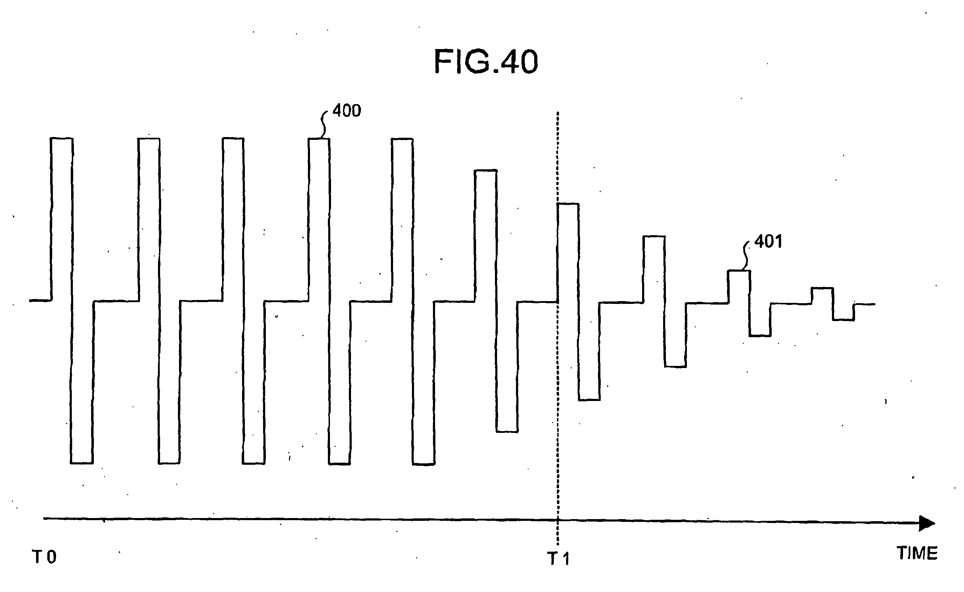

When the reader/writer supplies driving power to the IC card, as the radio wave for supplying power to the IC card attenuates, the voltage value to be applied to the cholesteric liquid crystal layer in the liquid crystal display decreases. Fig. 40 depicts attenuation of the AC pulse voltage to be applied to the cholesteric liquid crystals. As shown in Fig. 40, from time T0 to time T1, the amplitude value of an AC pulse voltage 400 exceeds the voltage value V4 shown in Fig. 5, thereby maintaining the planar state. However, when the amplitude value of an AC pulse voltage 401 attenuates like time T1 and thereafter, the voltage value becomes a value between the voltage value V2 and the voltage value V3 shown in Fig. 5, and the state changes to the focal conic state.

That is, in the case of Fig. 39A in which communication has finished normally, the IC card receives power from the reader/writer to maintain the upper layer in the planar state, and change the state of the lower layer between the planar state and the homeotropic state. Accordingly, the color of the display pattern changes between cyan and green. However, when the amplitude value of the AC pulse voltage attenuates, the state of the lower layer is fixed to the focal conic state. As a result, the display is made with only green.

In the case of Fig 39B in which communication has not finished normally, the IC card receives power from the reader/writer to maintain the lower layer in the focal conic state, and change the state of the upper layer between the planar state and the homeotropic state. Accordingly, the display changes between the green display pattern and the non-display state. However, when the amplitude value of the AC pulse voltage attenuates, since the state of the upper layer is fixed to the focal conic state, the display becomes a non-display state. To cause attenuation of the voltage pulse, it is only necessary to include a capacitor having appropriate capacity, or include a temporary capacitor such as a battery.

When the communication has normally finished, as the AC pulse voltage attenuates, the display of the IC card changes from the flash display to the normal display. Furthermore, when the communication has not finished normally, as the AC pulse voltage attenuates, the display of the IC card changes from the flash display to the non-display state. Therefore, the driving circuit for returning the display state of the IC card to the normal state is not required, thereby enabling reduction in the production cost.

Completion of communication is notified by flashing the liquid crystal display. However, the user can be notified of the completion of communication by generating sound by the IC card.

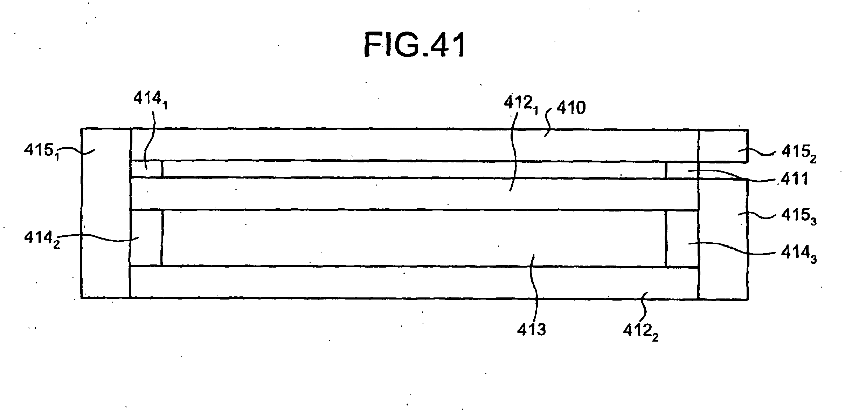

Fig. 41 depicts a structure of the IC card that generates sound for notifying completion of data communication. As shown in Fig. 41, the IC card has a vibrating film 410, a vibrator 411, polymer films 412₁ and 412₂, a cholesteric, liquid crystal portion 413, sealing materials 414₁ to 414₄, and wall units 415₁ to 415₃.

The vibrating film 410 vibrates to radiate sound, and the vibrator 411 vibrates the vibrating film 410 to generate sound. The polymer films 412₁ and 412₂ are, respectively, a transparent film substrate on the surface of which an electrode is formed. The cholesteric liquid crystal portion 413 is a liquid crystal display unit as shown in the first to the sixth embodiments. The sealing materials 414₁ to 414₄ are for fixing the polymer films 412₁ and 412₂ and the cholesteric liquid crystal portion 413. The wall units 415₁ to 415₃ are for fixing respective units from the side.

In this case, if the vibrating film 410 itself is formed as a substrate for the cholesteric liquid crystal portion 413, the orientation of the cholesteric liquid crystals changes due to the vibration of the vibrating film 410. Therefore, the polymer films 412₁ and 412₂ are used as the substrate for the cholesteric liquid crystal portion 413.

When the communication has finished normally, the vibrator 411 vibrates the vibrating film 410 at a high frequency, to generate high pitched sound, and when the communication has not finished normally, the vibrator 411 vibrates the vibrating film 410 at a low frequency, to generate low pitched sound. As a result, the user can be clearly notified whether the communication has finished normally by a different sound.

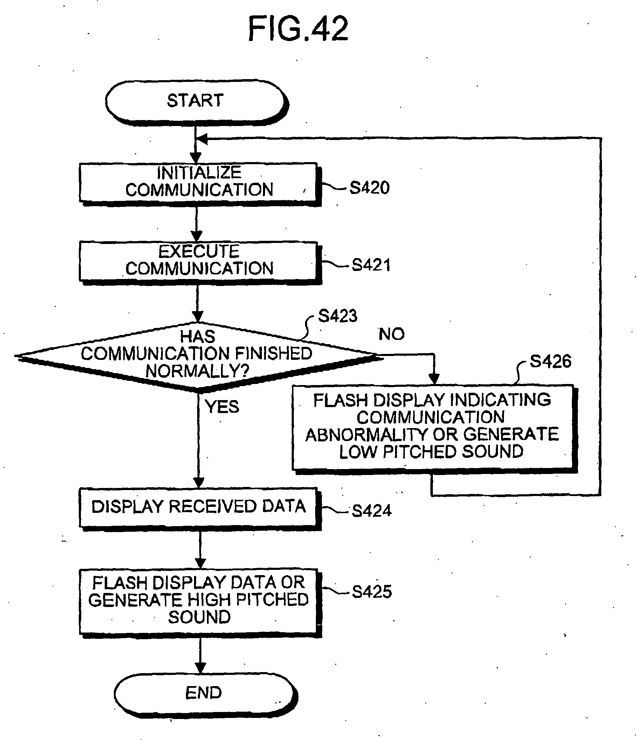

Fig. 42 is a flowchart of a notification process procedure performed by the IC card to notify a user whether data communication has finished normally. The IC card initializes the communication first, so as to achieve a communicable state with the reader/writer (step S420), and executes communication with the reader/writer (step S421).

The IC card then checks whether the communication has finished normally (step S422). When the communication has not finished normally (step S422, No), as explained with reference to Fig. 39B, the IC card flashes the display indicating that abnormality has occurred in the communication, or generates low pitched sound to inform the user of this matter (step S426), and proceeds to step S420. When the communication has finished normally (step S422, Yes), the IC card displays the received data (step S424), and flashes the displayed data to inform the user that the communication has finished, or generates high pitched sound to inform the user of this matter (step S426), to finish the notification process.

In the flowchart, the user is notified whether the communication has finished normally by the sound or the flash display. However, the sound and the flash display can be used together. Regarding the flash display, the flashing time and display color can be optionally selected so as to enable clear notification to the user. Furthermore, as for the output sound, optional expression such as volume of the sound, high or low pitch, pattern, and rhythm can be selected.

As explained above, according to the seventh embodiment, when transmission of data to the reader/writer or reception of data from the reader/writer has finished, the display is flashed or sound is generated to inform the user of completion of communication. As a result, the user can easily confirm whether the communication with the reader/writer has finished without any problem, thereby improving the convenience of the IC card.

In the seventh embodiment, the IC card with a liquid crystal display using the cholesteric liquid crystals is used. However, the number of the cholesteric liquid crystals constituting the liquid crystal display can be plural so that display can be made in a plurality of colors as shown in the first or the second embodiment, or can be single.

Furthermore, an application of the technique explained in the seventh embodiment is not limited to the liquid crystal display using the cholesteric liquid crystals, and the similar technique can be applied to the liquid crystal display using other display methods such as the electrophoretic method and the twist ball method. Furthermore, the similar technique can be applied to the electronic paper technology for other applications in which liquid crystal display is performed by a simple matrix method or the like.

In the first to the seventh embodiments, the orientation of the liquid crystal molecules in the cholesteric liquid crystal layer is changed, so as to reflect or transmit incident light, thereby displaying predetermined data. However, the liquid crystal display can have a function as a thermometer by using the temperature dependency of the wavelength of reflected light held by the cholesteric liquid crystals. In an eighth embodiment, therefore, a case that the liquid crystal display also functions as the thermometer by using the temperature dependency of the wavelength of reflected light held by the cholesteric liquid crystals is explained.

The temperature dependency of the wavelength of reflected light held by the cholesteric liquid crystals is explained first. As shown in Figs. 3A and 3B, in the cholesteric liquid crystals, the liquid crystal molecules form the helical structure, and the wavelength of reflected light reflected from the cholesteric liquid crystals in the planar state depends on the pitch of the helical structure.

The cholesteric liquid crystals include two types, that is, the one has a long pitch of the helical structure, and the other has a short pitch, when the temperature becomes high. When the pitch of the helical structure becomes long, the wavelength of reflected light shifts toward a red wavelength range (toward the long wavelength side), and when the pitch of the helical structure becomes short, the wavelength of reflected light shifts toward a blue wavelength range (toward the short wavelength side). That is, by using such a relationship between the color of the reflected light and temperature, the liquid crystal display having the cholesteric liquid crystal layers can be used as the thermometer.

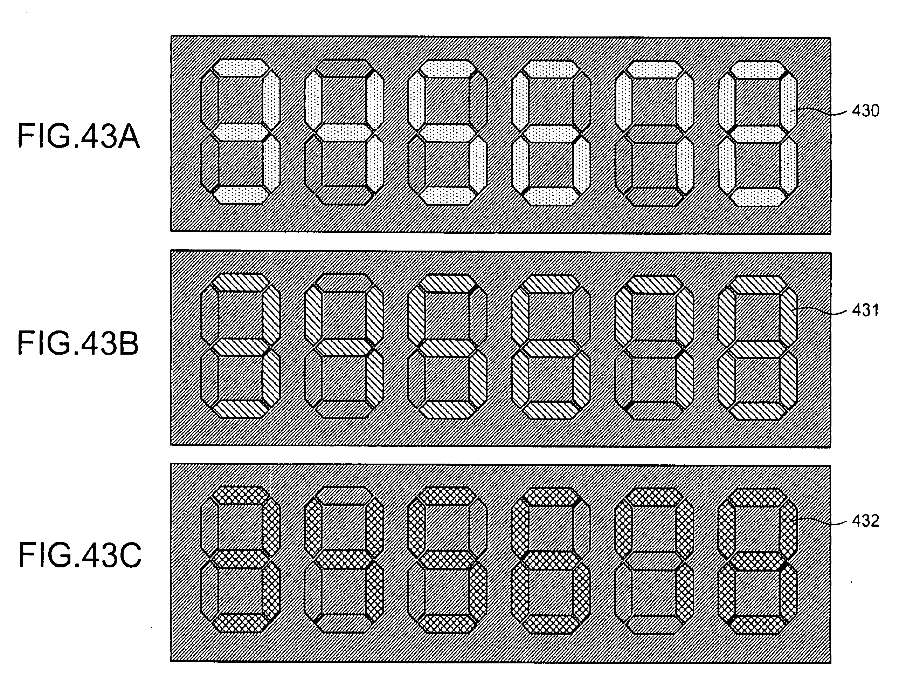

The display state when the liquid crystal display formed of the cholesteric liquid crystals is used as the thermometer is explained next. Figs. 43A, 43B and 43C are examples of the display states when a liquid crystal display formed of the cholesteric liquid crystals is used as the thermometer. It is assumed that cholesteric liquid crystals, in which as the temperature becomes higher, the wavelength of the reflected light in the planar state shifts toward the red wavelength range side, and as the temperature becomes lower, the wavelength of the reflected light shifts toward the blue wavelength range side, are used.

This is because as the temperature becomes higher, the wavelength of the reflected light shifts toward the red wavelength range, which is a warm color, and as the temperature becomes lower, the wavelength of the reflected light shifts toward the blue wavelength range, which is a cool color, which matches human feelings. However, even when cholesteric liquid crystals where as the temperature becomes higher, the wavelength of the reflected light shifts to the blue wavelength range side, and as the temperature becomes lower, the wavelength of the reflected light shifts to the red wavelength range side are used, there is no problem in measuring the temperature.

When the cholesteric liquid crystals are used as the thermometer, it is desired to reflect light in a visible radiation range in a wide temperature range. Specifically, the cholesteric liquid crystals are adjusted so that the dominant wavelength of the reflected light is in a range of about 400 to 700 nanometers, in a temperature range from - 20°C to 80°C. Particularly, it is desired that the dominant wavelength of the reflected light be about 400 nanometers at -20°C, and the dominant wavelength of the reflected light be about 700 nanometers at 80°C. Furthermore, if the cholesteric liquid crystals are put in strong direct sunlight, the cholesteric liquid crystals deteriorate due to ultraviolet rays included in the direct sunlight. Therefore, an ultraviolet cut film can be put on the surface of the liquid crystal display.

Fig. 43A depicts a data display state when the temperature is 0°C, and the data is displayed with a display color of blue 430. Fig. 43B depicts a data display state when the temperature is 20°C, and the data is displayed with a display color of green 431. Fig. 43C depicts a data display state when the temperature is 50°C, and the data is displayed with a display color of red 432.

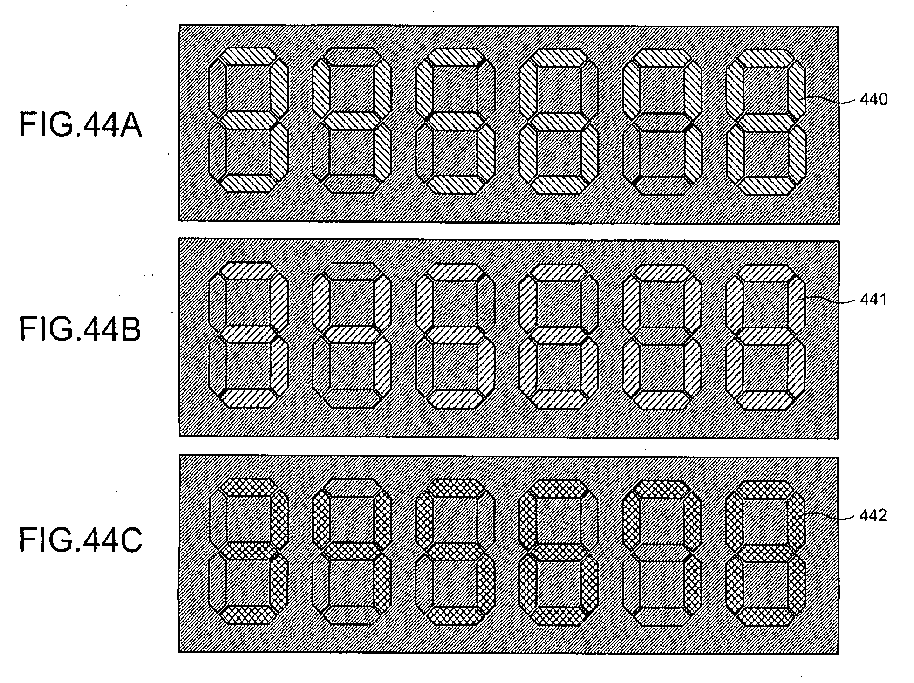

Figs. 44A, 44B and 44C are examples of display states when the liquid crystal display formed of the cholesteric liquid crystals is used as a clinical thermometer. In this case, the cholesteric liquid crystals are adjusted so that the dominant wavelength of the reflected light is in a range from 550 to 600 nanometers inclusive, in a temperature range from 34°C to 42°C, which is a human temperature range.

Fig. 44A depicts a data display state at 36°C, which is a normal human temperature, and the data is displayed with a display color of green 440. Fig. 44B depicts a data display state at around 37°C, which shows slight fever, and the data is displayed with a display color of yellow 441. Yellow is an appropriate color for giving warning to the user. Fig. 44C depicts a data display state when the body temperature becomes 38°C or higher, and the data is displayed with a display color of red 442. By the red display, the user can be informed of abnormality in the physical condition.

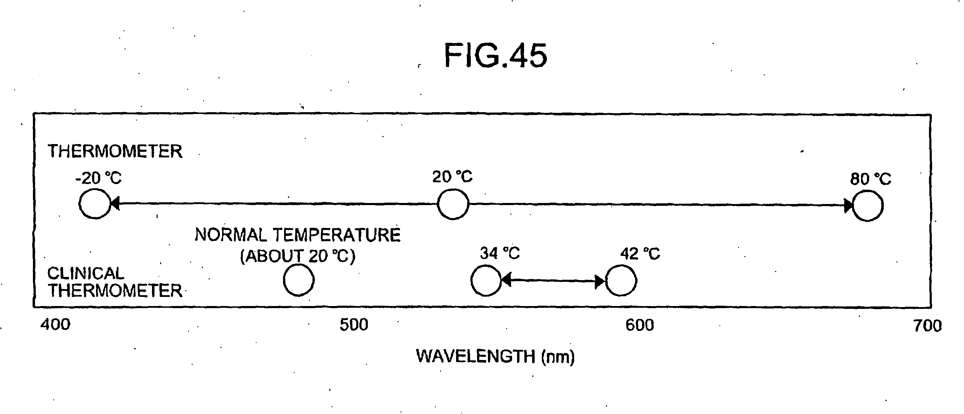

Fig. 45 depicts a relationship between a temperature range measured by the thermometer and a wavelength of reflected light reflected by the cholesteric liquid crystals in a planar condition according to the eighth embodiment. As shown in Fig. 45, when the cholesteric liquid crystals are used as the thermometer, the cholesteric liquid crystals are adjusted so that the dominant wavelength of the reflected light is in a range from 400 to 700 nanometers, in a temperature range from - 20°C to 80°C. When the cholesteric liquid crystals are used as the clinical thermometer, the cholesteric liquid crystals are adjusted so that the dominant wavelength of the reflected light is in a range from 550 to 600 nanometers inclusive, in a temperature range from 34°C to 42°C.

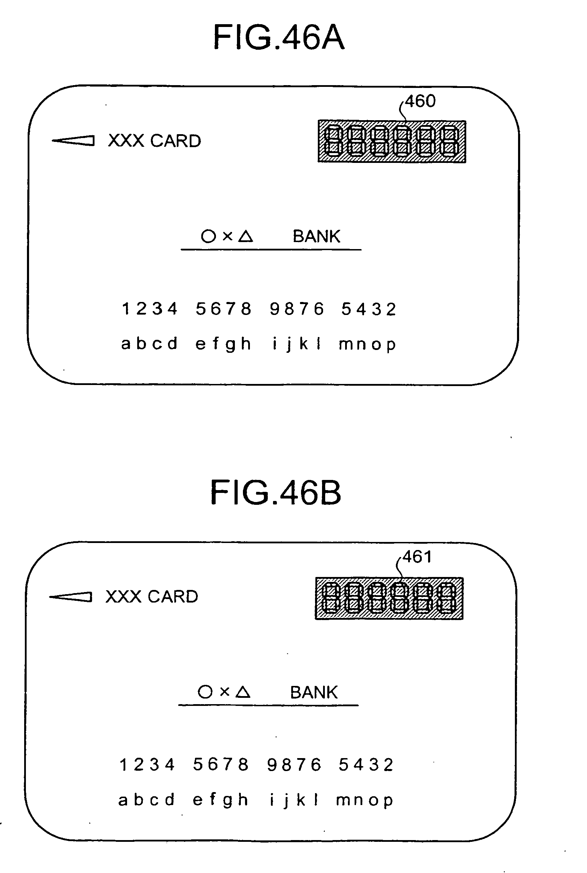

Figs. 46A and 46B are examples of an IC card with the liquid crystal display functioning as the thermometer. As shown in Fig. 46A, when the temperature is low, the data display color is blue 460, and when temperature is high (Fig. 46B) the data display color is red 461. Although not shown, a reference table displaying the correspondence between the temperature and data display color is printed on the IC card, so that the user can refer to the table.

According to the eighth embodiment, since the temperature dependency of the wavelength of reflected light held by the cholesteric liquid crystals is used, to give the function as the thermometer to the liquid crystal display, multifunctional IC card can be realized.

In the eighth embodiment, the liquid crystal display that displays data has the function as the thermometer, however, the present invention is not limited thereto, and a cholesteric liquid crystal portion that functions as the thermometer can be provided separately from the liquid crystal display that displays data. Furthermore, the number of the cholesteric liquid crystal layer constituting the liquid crystal display can be plural so that display can be made in a plurality of colors as shown in the first or the second embodiment, or can be single.

### INDUSTRIAL APPLICABILITY

The IC card according to the present invention effectively displays information by making the best use of the characteristic of the cholesteric liquid crystals, and is useful for IC cards, in which users' convenience should be improved.

## Claims

1. An IC card (12) adapted to perform transmission of information to an external device, reception of information from the external device or both, comprising:
an information display unit (15) including a segment-type display unit formed of a first liquid-crystal layer (63₁, 63₂) that forms a cholesteric phase, equipped with electrodes (62₁, 62₂; 62₃) for independently applying a voltage to each of a plurality of segments that form an information display pattern, and a second liquid-crystal layer (63₃) that forms the cholesteric phase, equipped with a pair of electrodes (62_{4,5}) for uniformly applying a voltage to the second liquid-crystal layer (63₃), laminated on the rear side of the first liquid-crystal layer (63_{1,2}),
wherein the segments are separated from each other by a separation layer (61) and the orientation of liquid-crystal molecules in the liquid-crystal layers (63) is adapted to be changed by a voltage pulse, so as to transmit or reflect light, thereby displaying predetermined information.

2. An IC card according to claim 1, further comprising a condition-determining unit (16) that is adapted to determine whether information to be displayed satisfies a predetermined condition,
wherein the information display unit is adapted to apply a voltage to the first liquid-crystal layer (63₁, 63₂) and to the second liquid-crystal layer (63₃) based on the determination result delivered by the condition-determining unit, to change the orientation of the liquid-crystal molecules in the liquid crystals that form the cholesteric phase, so as to be able to transmit or reflect light, thereby changing the display color of the segment-type display unit.

3. An IC card according to claim 2, wherein the colors of light reflected by the two respective laminated liquid-crystal layers in the planar state are complementary.

4. An IC card according to claim 3, wherein the dominant wavelengths of the reflected light are, respectively, in the range 570 nanometers to 640 nanometers inclusive, and in the range 450 nanometers to 500 nanometers inclusive.

5. An IC card according to claim 3 or 4, wherein the first liquid-crystal layer reflects red light in the planar state, and the second liquid-crystal layer reflects blue light in the planar state.

6. An IC card according to any preceding claim, further comprising a power accumulator (177) that accumulates power, wherein the information display unit is able to display information by using the power accumulated by the power accumulator.

7. An IC card according to any preceding claim, wherein the information display unit is adapted to issue a communication completion signal indicating that communication has finished when the transmission of information to the external device, or the reception of information from the external device, or both, is finished.

8. An IC card according to any preceding claim, wherein the information display unit is adapted to apply the voltage so as to switch the orientation of liquid-crystal molecules between the planar state and a homeotropic state.

9. An IC card according to any preceding claim, further comprising an input receiving unit (176) that is adapted to receive an input of a switching request for switching from a single information display to simultaneous display of pieces of information, wherein upon reception of the switching request by the input receiving unit, the information display unit switches the display from the single information display to simultaneous display of pieces of information.

10. An IC card according to claim 9, wherein the information display unit is adapted to display the pieces of information with different colors.

11. An IC card according to any preceding claim, wherein the information display unit includes a photoabsorption layer (64) that is adapted to absorb light having penetrated the first and the second liquid-crystal layers.

12. An IC card according to any preceding claim, wherein the segment-type display unit includes a liquid-crystal layer that forms the cholesteric phase and has a helical structure of liquid-crystal molecules that reflects left-circularly polarized light, and a liquid-crystal layer that forms the cholesteric phase and has a helical structure of liquid-crystal molecules that reflects right-circularly polarized light, as the first and second liquid-crystal layers respectively.

13. An IC card according to claim 9 or 10, wherein when two pieces of information are simultaneously displayed, the information display unit is adapted to display respective pieces of information with a color obtained by superposing light having a dominant wavelength from 530 nanometers to 570 nanometers inclusive, reflected by liquid crystals that form a first cholesteric phase and light having a dominant wavelength from 450 nanometers to 490 nanometers inclusive, reflected by liquid crystals that form a second cholesteric phase on each other, and a color obtained by superposing light having a dominant wavelength from 530 nanometers to 570 nanometers inclusive, reflected by liquid crystals that form a third cholesteric phase and light having a dominant wavelength from 610 nanometers to 650 nanometers inclusive, reflected by liquid crystals that form a fourth cholesteric phase on each other.

14. An IC card according to claim 1, wherein the information display unit includes a luminous layer (231) that is adapted to accumulate light energy and emits light by using accumulated light energy, so that the light emitted from the luminous layer irradiates the first and second liquid- crystal layers.

15. An IC card according to claim 14, wherein the dominant wavelength of the light emitted from the luminous layer is included in the wavelength range of reflected light reflected by the liquid crystals that form the cholesteric phase in the planar state.

16. An IC card according to claim 14, wherein the said liquid-crystal layers that form the cholesteric phase have a helical structure of liquid-crystal molecules reflecting left-circularly polarized light or right-circularly polarized light in the planar state, and the information display unit comprises a quarter-wave plate (251) and a polarizing plate (252) that convert a polarized state of light to the left-circularly polarized light or the right- circularly polarized light, respectively, between the liquid-crystal layers that form the cholesteric phase, which reflect the left-circularly polarized light or the right-circularly polarized light and the luminous layer.

17. An IC card (282) according to claim 14, further comprising a light-energy-receiving unit that is adapted to receive a supply of light energy from the external device, and the luminous layer accumulates the light-energy-received by the light energy receiving unit.

18. An IC card according to claim 1, wherein the information display unit is adapted to start initialization of information display by achieving synchronization with a predetermined signal issued during execution of initialization of communication with the external device.

19. An IC card according to claim 1, wherein the liquid crystals forming the cholesteric phase are formed so as to reflect light in a visible range in the planar state with respect to a predetermined temperature range, and the information display unit is adapted to display predetermined information by transmitting or reflecting light and to display information relating to temperature with a color of light reflected by the liquid crystals that form the cholesteric phase corresponding to the temperature.

20. An IC card according to claim 1, wherein the information display unit further includes a second segment-type display unit formed of a third liquid-crystal layer (194₅, 194₆) that forms a cholesteric phase, equipped with electrodes (192₇, 192₈; 192₉) for independently applying a voltage to each of a plurality of segments that form an information display pattern, and a fourth liquid-crystal layer (194₁₀) that forms the cholesteric phase, equipped with electrodes (192_{12, 14}) for uniformly applying a voltage to the fourth liquid-crystal layer, laminated on the rear side of the third liquid-crystal layer (194₅, 194₆), wherein the segments are separated from each other by a separation layer (193₃) and the orientation of liquid-crystal molecules in the liquid-crystal layers is changed by a voltage pulse, and the information display unit is adapted to switch from single-information display to simultaneous display of pieces of information.

## Patentansprüche

1. IC-Karte (12), die dafür ausgelegt ist, um das Senden von Informationen an eine externe Vorrichtung, den Empfang von Informationen von der externen Vorrichtung oder beides auszuführen, mit:
einer Informationsanzeiqeeinheit (15), die eine Anzeigeeinheit vom Segmenttyp enthält, die aus einer ersten Flüssigkristallschicht (63₁, 63₂) gebildet ist, die eine cholesterischc Phase bildet, mit Elektroden (62₁, 62₂; 62₃) zum unabhängige Anwenden einer Spannung auf jedes von einer Vielzahl von Segmenten versehen ist, die ein Informationsanzeigemuster bilden, und einer zweiten Flüssigkristallschicht (63₃), die die cholesterische Phase bildet, mit einem Paar von Elektroden (62_{4,5}) zum gleichförmigen Anwenden einer Spannung auf die zweite Flüssigkristallschicht (63₃) versehen ist und auf die Rückseite der ersten Flüssigkristallschicht (63_{1,2}) laminiert ist,
bei der die Segmente durch eine Trennschicht (61) voneinander getrennt sind und die Orientierung von Flüssigkristallmolekülen in den Flüssigkristallschichten (63) dafür ausgelegt ist, um durch einen Spannungsimpuls verändert zu werden, um Licht hindurchzulassen oder zu reflektieren, wodurch vorbestimmte Informationen angezeigt werden.

2. IC-Karte nach Anspruch 1, ferner mit einer Bedingungshestimmungseinheit (16), die dafür ausgelegt ist, um zu bestimmen, ob Informationen, die anzuzeigen sind, einer vorbestimmten Bedingung genügen,
bei der die Informationsanzeigeeinheit dafür ausgelegt ist, um eine Spannung auf die erste Flüssigkristallschicht (63₁, 63₂) und auf die zweite Flüssigkristallschicht (63₃) auf der Basis des Bestimmungsresultats anzuwenden, das durch die Bedingungsbestimmungseinheit geliefert wird, um die Orientierung der Flüssigkristallmoleküle in den Flüssigkristallen, die die cholesterische Phase bilden, zu verändern, so dass Licht hindurchgelassen oder reflektiert werden kann, wodurch die Anzeigefarbe der Anzeigeeinheit vom Segmenttyp verändert wird.

3. IC-Karte nach Anspruch 2, bei der die Farben von Licht, das durch die zwei jeweiligen laminierten Flüssigkristallschichten in dem planaren Zustand reflektiert wird, komplementär sind.

4. IC-Karte nach Anspruch 3, bei der die dominierenden Wellenlängen des reflektierten Lichtes jeweilig in dem Bereich von 570 Nanometern bis einschließlich 640 Nanometern und in dem Bereich von 450 Nanometern bis einschließlich 500 Nanometern liegen.

5. IC-Karte nach Anspruch 3 oder 4, bei der die erste Flüssigkristallschicht in dem planaren Zustand rotes Licht reflektiert und die zweite Flüssigkristallschicht in dem planaren Zustand blaues Licht reflektiert.

6. IC-Karte nach einem vorhergehenden Anspruch, ferner mit einem Energieakkumulator (177), der Energie akkumuliert, bei der die Informationsanzeigeeinheit Informationen unter Verwendung der durch den Energieakkumulator akkumulierten Energie anzeigen kann.

7. IC-Karte nach einem vorhergehenden Anspruch, bei der die Informationsanzeigeeinheit dafür ausgelegt ist, um ein Kommunikationsvollzugssignal auszugeben, das angibt, dass die Kommunikation beendet ist, wenn das Senden von Informationen an die externe Vorrichtung oder der Empfang von Informationen von der externen Vorrichtung, oder beides, beendet ist.

8. IC-Karte nach einem vorhergehenden Anspruch, bei der die Informationsanzeigeeinheit dafür ausgelegt ist, um die Spannung so anzuwenden, um die Orientierung von Flüssig kristallmolekülen zwischen dem planaren Zustand und einem homöotropen Zustand umzuschalten.

9. IC-Karte nach einem vorhergehenden Anspruch, ferner mit einer Eingabeempfangseinheit (176), die dafür ausgelegt ist, um die Eingabe einer Umsnhaltaufforderung zum Umschalten von einer Einzelinformationsanzeige auf eine Simultaninformationsanzeige von Informationen zu empfangen, bei der bei Empfang der Umschaltaufforderung durch die Eingabeempfangseinheit die Informationsanzeigeeinheit die Anzeige von der Einzelinformationsanzeige auf die Simultananzeige von Informationen umschaltet.

10. IC-Karte nach Anspruch 9, bei der die Informationsanzeigeeinheit dafür ausgelegt ist, um die Informationen mit verschiedenen Farben anzuzeigen.

11. IC-Karte nach einem vorhergehenden Anspruch, bei der die Informationsanzeigeeinheit eine Photoabsorptionsschicht (64) enthält, die dafür ausgelegt ist, um Licht zu absorbieren, das die ersten und zweiten Flüssigkristallschichten durchdrungen hat.

12. IC-Karte nach einem vorhergehenden Anspruch, bei der die Anzeigeeinheit vom Segmenttyp als erste und zweite Flüssigkristallschichten eine Flüssigkristallschicht enthält, die die cholesterische Phase bildet und eine Helixstruktur von Flüssigkristallmolekülen hat, die links-zirkular polarisiertes Licht reflektiert, bzw. eine Flüssigkristallschicht, die die cholcsterische Phase bildet und eine Helixstruktur von Flüssigkristallmolekülen hat, die rechts-zirkular polarisiertes Licht reflektiert.

13. IC-Karte nach Anspruch 9 oder 10, bei der dann, wenn zwei Informationen simultan angezeigt werden, die Informationsanzeigeeinheit dafür ausgelegt ist, um jeweilige Informationen mit einer Farbe anzuzeigen, die erhalten wird, indem Licht, das eine dominierende Wellenlänge von 530 Nanometern bis einschließlich 570 Nanometern hat und durch Flüssigkristalle reflektiert wird, die eine erste cholesterische Phase bilden, und Licht, das eine dominierende Wellenlänge von 450 Nanometern bis einschließlich 490 Nanometern hat und durch Flüssigkristalle reflektiert wird, die eine zweite cholesterische Phase bilden, miteinander überlagert wird, und einer Farbe, die erhalten wird, indem Licht, das eine dominierende Wellenlänge von 530 Nanometern bis einschließlich 570 Nanometern hat und durch Flüssigkristalle reflektiert wird, die eine dritte cholesterische Phase bilden, und Licht, das eine dominierende Wellenlänge von 610 Nanometern bis einschließlich 650 Nanometern hat und durch Flüssigkristalle reflektiert wird, die eine vierte cholesterische Phase bilden, miteinander überlagert wird.

14. IC-Karte nach Anspruch 1, bei der die Informationsanzeigeeinheit eine Leuchtschicht (231) enthält, die dafür ausgelegt ist, um Lichtenergie zu akkumulieren, und Licht unter Verwendung von akkumulierter Lichtenergie emittiert, so dass das Licht, das von der Leuchtschicht emittiert wird, auf die ersten und zweiten Flüssigkristallschichten eingestrahlt wird.

15. IC-Karte nach Anspruch 14, bei der die dominierende Wellenlänge des Lichtes, das von der Leuchtschicht emittiert wird, in dem Wellenlängenbereich von reflektiertem Licht enthalten ist, das durch die Flüssigkristalle, die die cholesterische Phase bilden, in dem planaren Zustand reflektiert wird.

16. IC-Karte nach Anspruch 14, bei der die Flüssigkristallschichten, die die cholesterische Phase bilden, eine Helixstruktur von Flüssigkristallmolekülen haben, die links-zirkular polarisiertes Licht oder rechts-zirkular polarisiertes Licht in dem planaren Zustand reflektiert, und die Informationsanzeigeeinheit eine Viertelwellenplatte (251) und eine Polarisationsplatte (252), die jeweilig einen polarisierten Zustand von Licht in das links-zirkular polarisierte Licht oder das rechts-zirkular polarisierte Licht konvertieren, zwischen den Flüssigkristallschichten, die die cholesterische Phase bilden und das links-zirkular polarisierte Licht oder das rechts-zirkular polarisierte Licht reflektieren, und der Leuchtschicht umfasst.

17. IC-Karte (282) nach Anspruch 14, ferner mit einer Lichtenergieempfangseinheit, die dafür ausgelegt ist, um eine Zufuhr von Lichtenergie von der externen Vorrichtung zu empfangen, bei der die Leuchtschicht die durch die Lichtenergieempfangseinheit empfangene Lichtenergie akkumuliert.

18. IC-Karte nach Anspruch 1, bei der die Informationsanzeigeeinheit dafür ausgelegt ist, um die Initialisierung der Informationsanzeige durch Erreichen einer Synchronisation mit einem vorbestimmten Signal zu starten, das während der Ausführung der Initialisierung der Kommunikation mit der externen Vorrichtung ausgegeben wird.

19. IC-Kartc nach Anspruch 1, bei der die Flüssigkristalle, die die cholesterische Phase bilden, so gebildet sind, um Licht in einem sichtbaren Bereich in dem planaren Zustand hinsichtlich eines vorbestimmten Temperaturbereiches zu reflektieren, und die Informationsanzeigeeinheit dafür ausgelegt ist, um vorbestimmte Informationen anzuzeigen, indem Licht hindurchgelassen oder reflektiert wird, und Informationen bezüglich der Temperatur mit einer Farbe von Licht, das durch die Flüssigkristalle reflektiert wird, die die cholesterische Phase bilden, entsprechend der Temperatur anzuzeigen.

20. IC-Karte nach Anspruch 1, bei der die Informationsanzeigeeinheit ferner eine zweite Anzeigeeinheit vom Segmenttyp enthält, die aus einer dritten Flüssigkristallschicht (194₅, 194₆) gebildet ist, die eine cholesterische Phase bildet, mit Elektroden (192₇, 192₈; 192₉) zum unabhängigen Anwenden einer Spannung auf jedes von einer Vielzahl von Segmenten versehen ist, die ein Informationsanzeigemuster bilden, und einer vierten Flüssigkristallschicht (194₁₀), die die cholesterische Phase bildet, mit Elektroden (192_{12,14}) zum gleichförmigen Anwenden einer Spannung auf die vierte Flüssigkristallschicht versehen ist und auf die Rückseite der dritten Flüssigkristallschicht (194₅, 199₆) laminiert ist, bei der die Segmente durch eine Trennschicht (193₃) voneinander getrennt sind und die Orientierung von Flüssigkristallmolekülon in den Flüssigkristallschichten durch einen Spannungsimpuls verändert wird und die Informationsanzeigeeinheit dafür ausgelegt ist, um von einer Einzelinformationsanzeige auf eine Simultananzeiqe von Informationen umzuschalten.

## Revendications

1. Carte à circuits intégrés (12) adaptée pour effectuer une transmission d'information vers un dispositif externe, une réception d'information depuis le dispositif externe ou les deux, comportant :
une unité d'affichage d'information (15) comprenant une unité d'affichage de type à segments constituée d'une première couche à cristaux liquides (63₁, 63₂) qui forme une phase cholestérique, équipée d'électrodes (62₁, 62₂ ; 63₃) pour appliquer indépendamment une tension à chacun d'une pluralité de segments qui forment un motif d'affichage d'information, et une seconde couche à cristaux liquides (63₃) qui forme la phase cholestérique, équipée d'une paire d'électrodes (62_{4,5}) pour appliquer uniformément une tension à la seconde couche à cristaux liquides (63₃), stratifiée sur le côté arrière de la première couche à cristaux liquides (63_{1,2}),
dans laquelle les segments sont séparés les uns des autres par une couche de séparation (61) et l'orientation des molécules de cristaux liquides dans les couches à cristaux liquides (63) est adaptée pour être modifiée par une impulsion de tension, de manière à transmettre ou à réfléchir la lumière, affichant ainsi une information prédéterminée.

2. Carte à circuits intégrés selon la revendication 1, comportant en outre une unité de détermination de condition (16) qui est adaptée pour déterminer si une information à afficher satisfait une condition prédéterminée,
dans laquelle l'unité d'affichage d'information est adaptée pour appliquer une tension à la première couche à cristaux liquides (63₁, 63₂) et à la seconde couche de cristaux liquides (63₃) en fonction du résultat de détermination délivré par l'unité de détermination de condition, pour modifier l'orientation des molécules de cristaux liquides dans les cristaux liquides qui forment la phase cholestérique, de manière à pouvoir transmettre ou réfléchir la lumière, modifiant ainsi la couleur de l'affichage de l'unité d'affichage de type à segments.

3. Carte à circuits intégrés selon la revendication 2, dans laquelle les couleurs de la lumière réfléchie par les deux couches à cristaux liquides stratifiées respectives dans l'état planaire sont complémentaires.

4. Carte à circuits intégrés selon la revendication 3, dans laquelle les longueurs d'onde dominantes de la lumière réfléchie se trouvent respectivement dans la plage comprise entre 570 nm et 640 nm inclus et dans la plage comprise entre 450 nm à 500 nm inclus.

5. Carte à circuits intégrés selon la revendication 3 ou 4, dans laquelle la première couche à cristaux liquides réfléchit une lumière rouge dans l'état plan, et la seconde couche de cristaux liquides réfléchit une lumière bleue dans l'état plan.

6. Carte à circuits intégrés selon l'une quelconque des revendications précédentes, comportant en outre un accumulateur d'énergie (177) qui accumule de l'énergie, dans laquelle l'unité d'affichage d'information peut afficher une information en utilisant l'énergie accumulée par l'accumulateur d'énergie.

7. Carte à circuits intégrés selon l'une quelconque des revendications précédentes, dans laquelle l'unité d'affichage d'information est adaptée pour émettre un signal d'achèvement de communication indiquant qu'une communication est terminée lorsque la transmission de l'information vers le dispositif externe, ou la réception de l'information depuis le dispositif externe, ou les deux, est terminée.

8. Carte à circuits intégrés selon l'une quelconque des revendications précédentes, dans laquelle l'unité d'affichage d'information est adaptée pour appliquer la tension de manière à commuter l'orientation des molécules de cristaux liquides entre l'état planaire et un état homéotrope.

9. Carte à circuits intégrés selon l'une quelconque des revendications précédentes, comportant en outre une unité de réception d'entrée (176) qui est adaptée pour recevoir une entrée d'une requête de commutation pour passer d'un affichage d'information unique à un affichage simultané de parties d'information, dans laquelle, lors de la réception de la requête de commutation par l'unité de réception d'entrée, l'unité d'affichage d'information commute de l'affichage d'information unique vers l'affichage simultané de parties d'information.

10. Carte à circuits intégrés selon la revendication 9, dans laquelle l'unité d'affichage d'information est adaptée pour afficher les parties d'information avec des couleurs différentes.

11. Carte à circuits intégrés selon l'une quelconque des revendications précédentes, dans laquelle l'unité d'affichage d'information comprend une couche de photoabsorption (64) qui est adaptée pour absorber une lumière ayant pénétré dans la première et la seconde couches à cristaux liquides.

12. Carte à circuits intégrés selon l'une quelconque des revendications précédentes, dans laquelle l'unité d'affichage de type à segments comprend une couche à cristaux liquides qui forment la phase cholestérique et possède une structure hélicoïdale de molécules de cristaux liquides qui réfléchit une lumière polarisée circulairement à gauche, et une couche à cristaux liquides qui forment la phase cholestérique et possède une structure hélicoïdale de molécules de cristaux liquides qui réfléchit une lumière polarisée circulairement à droite, en tant que première et seconde couches à cristaux liquides, respectivement.

13. Carte à circuits intégrés selon la revendication 9 ou 10, dans laquelle, lorsque deux parties d'information sont simultanément affichées, l'unité d'affichage d'information est adaptée pour afficher des parties d'information respectives avec une couleur obtenue en superposant une lumière possédant une longueur d'onde dominante comprise entre 530 nm et 570 nm inclus, réfléchie par les cristaux liquides qui forment une première phase cholestérique et une lumière possédant une longueur d'onde dominante comprise entre 450 nm et 490 nm inclus, réfléchie par les cristaux liquides qui forment une seconde phase cholestérique l'une sur l'autre et une couleur obtenue en superposant une lumière possédant une longueur d'onde dominante comprise entre 530 nm et 570 nm inclus, réfléchie par les cristaux liquides qui forment une troisième phase cholestérique et une lumière possédant une longueur d'onde dominante comprise entre et 650 nm inclus, réfléchie par les cristaux liquides qui forment une quatrième phase cholestérique l'une sur l'autre.

14. Carte à circuits intégrés selon la revendication 1, dans laquelle l'unité d'affichage d'information comprend une couche lumineuse (231) qui est adaptée pour accumuler une énergie lumineuse et émet de la lumière en utilisant l'énergie lumineuse accumulée, de sorte que la lumière émise depuis la couche lumineuse irradie les première et seconde couches à cristaux liquides.

15. Carte à circuits intégrés selon la revendication 14, dans laquelle la longueur d'onde dominante de la lumière émise depuis la couche lumineuse est comprise dans une plage de longueur d'onde de la lumière réfléchie réfléchie par les cristaux liquides qui forment la phase cholestérique dans l'état plan.

16. Carte à circuits intégrés selon la revendication 14, dans laquelle lesdites couches à cristaux liquides qui forment la phase cholestérique possèdent une structure hélicoïdale de molécules de cristaux liquides réfléchissant une lumière polarisée circulairement à gauche ou une lumière polarisée circulairement à droite dans l'état plan, et l'unité d'affichage d'information comprend une lame quart d'onde (251) et une plaque de polarisation (252) qui convertissent un état polarisé de la lumière en lumière polarisée circulairement à gauche ou en lumière polarisée circulairement à droite, respectivement, entre les couches à cristaux liquides qui forment la phase cholestérique, qui réfléchissent la lumière polarisée circulairement à gauche ou la lumière polarisée circulairement à droite et la couche lumineuse.

17. Carte à circuits intégrés (282) selon la revendication 14, comportant en outre une unité de réception d'énergie lumineuse qui est adaptée pour recevoir une alimentation en énergie lumineuse depuis le dispositif externe, et la couche lumineuse accumule l'énergie lumineuse reçue grâce à l'unité de réception d'énergie lumineuse.

18. Carte à circuits intégrés selon la revendication 1, dans laquelle l'unité d'affichage d'information est adaptée pour commencer l'initialisation de l'affichage d'information en achevant la synchronisation avec un signal prédéterminé émis pendant l'exécution de l'initialisation de la communication avec le dispositif externe.

19. Carte à circuits intégrés selon la revendication 1, dans laquelle les cristaux liquides formant la phase cholestérique sont formés de manière à réfléchir la lumière dans une plage visible dans l'état planaire concernant une plage de température prédéterminée, et l'unité d'affichage d'information est adaptée pour afficher une information prédéterminée en transmettant ou en réfléchissant la lumière et est adaptée pour afficher une information concernant la température avec une couleur de la lumière réfléchie par les cristaux liquides qui forment la phase cholestérique correspondant à la température.

20. Carte à circuits intégrés selon la revendication 1, dans laquelle l'unité d'affichage d'information comprend en outre une seconde unité d'affichage de type à segments formée par une troisième couche à cristaux liquides (194₅, 194₆) qui forment une phase cholestérique, équipée d'électrodes (192₇, 192₈ ; 192₉) pour appliquer indépendamment une tension à chacun d'une pluralité de segments qui forment un motif d'affichage d'information, et une quatrième couche à cristaux liquides (194₁₀) qui forment la phase cholestérique, équipée d'électrodes (192_{12,14}) pour appliquer uniformément une tension à la quatrième couche à cristaux liquides, stratifiée sur le côté arrière de la troisième couche à cristaux liquides (194₅, 194₆), dans laquelle les segments sont séparés les uns des autres par une couche de séparation (193₃) et l'orientation des molécules de cristaux liquides dans les couches à cristaux liquides est modifiée par une impulsion de tension, et l'unité d'affichage d'information est adaptée pour passer d'un affichage d'information unique à un affichage simultané de parties d'information.
